# EUROPEAN PATENT SPECIFICATION

(11) **EP 2 914 866 B1**
(45) Date of publication and mention of the grant of the patent: **05.12.2018**
(21) Application number: 13850823.9
(22) Date of filing: 31.10.2013
(51) Int. Cl.: F16D 65/06, F16D 65/09, F16D 65/095, F16D 65/097

(54) **GUIDE PIN FOR DISC BRAKE ASSEMBLY, DISC BRAKE ASSEMBLY INCLUDING SUCH A GUIDE PIN AND METHOD FOR PRODUCING A DISC BRAKE ASSEMBLY INCLUDING SUCH A GUIDE PIN**
FÜHRUNGSSTIFT FÜR EINE SCHEIBENBREMSENANORDNUNG, SCHEIBENBREMSENANORDNUNG MIT SOLCH EINEM FÜHRUNGSSTIFT UND VERFAHREN ZUR HERSTELLUNG EINER SCHEIBENBREMSENANORDNUNG MIT SOLCH EINEM FÜHRUNGSSTIFT
TIGE DE GUIDAGE POUR ENSEMBLE FREIN À DISQUE, ENSEMBLE FREIN À DISQUE COMPRENANT UNE TELLE TIGE DE GUIDAGE ET PROCÉDÉ DE FABRICATION D'UN ENSEMBLE FREIN À DISQUE COMPRENANT UN TELLE TIGE DE GUIDAGE

(30) Priority: 01.11.2012 US 201213666249; 15.03.2013 US 201313832100; 15.03.2013 US 201313833416
(43) Date of publication of application: 09.09.2015
(73) Proprietor: Kelsey-Hayes Company, Livonia, MI 48150 (US); Lucas Automotive GmbH, 56070 Koblenz (DE)
(72) Inventor: GERBER, Kraig, Plymouth, MI 48160 (US); MORAIS, Eduardo, South Lyon, MI 48178 (US); SMITH, Daniel, Livonia, MI 48150 (US); BECKER, Marco, 56651 Oberdurenbach (DE); ROESSINGER, Florian, 56564 Neuwied (DE); SCHROETER, Christian, 54389 Sinzing (DE); ZENZEN, Guido, 56290 Macken (DE)
(74) Representative: Schmidt, Steffen J.
(86) International application number: PCT/US2013/067731
(87) International publication number: WO 2014/071001

(56) References cited:
- EP-A1- 0 062 403
- DE-A1- 2 705 788
- DE-A1- 3 032 513
- DE-A1-102013 011 469
- DE-U1-202008 006 779
- US-A- 6 026 938
- US-A1- 2006 049 008
- US-A1- 2012 067 678
- US-B1- 8 051 958

## Description

### BACKGROUND OF THE INVENTION

This invention relates in general to vehicle brake assemblies and in particular to an improved structure for a guide pin for a vehicle disc brake assembly, disc brake assembly including such a guide pin and method for producing a disc brake assembly including such a guide pin. Such a vehicle brake assembly is for instance known from DE-A-30 32 513.

Most vehicles today are equipped with a brake system for retarding or stopping movement of the vehicle in a controlled manner. A typical brake system for an automobile or truck includes a disc brake assembly for each of the front wheels and either a drum brake assembly or a disc brake assembly for each of the rear wheels. The brake assemblies are typically actuated by hydraulic or pneumatic pressure generated when an operator of the vehicle depresses a brake pedal. The structures of these drum brake assemblies and disc brake assemblies, as well as the actuators therefore are well known in the art.

A typical disc brake assembly includes an anchor bracket which is secured to a fixed, non-rotatable component of the vehicle. A pair of brake shoes are supported on the anchor bracket for sliding movement relative thereto. The brake shoes have respective friction pads which are disposed on opposite sides of a brake disc. The disc, in turn, is connected to the wheel of the vehicle for rotation therewith. To effect braking action, the brake shoes are moved inwardly toward one another so as to frictionally engage the opposed sides of the disc. Such frictional engagement causes retarding or stopping of the rotational movement of the disc and, therefore, the wheel of the vehicle in a controlled manner.

To accomplish this, the disc brake assembly further includes a caliper assembly for selectively moving the brake shoes into frictional engagement with the brake disc. The caliper assembly typically includes guide pins or other components to slidably support a caliper housing relative to the fixed anchor bracket. The caliper housing is generally C-shaped, having an inboard leg disposed adjacent the inboard brake shoe and an outboard leg disposed adjacent to the outboard brake shoe. One or more hydraulically or pneumatically actuated pistons are provided in respective cylindrical recesses formed in the caliper inboard leg adjacent to the inboard brake shoe. When the brake pedal is depressed, the piston and the inboard leg of the caliper are urged apart from one another. Specifically, the piston is urged outwardly, while the outboard leg of the caliper is urged inwardly. As mentioned above, the piston is disposed adjacent to the inboard brake shoe and, therefore, urges it outwardly toward the inner side of the disc. Because the caliper is slidably mounted on the pins of the anchor bracket, the caliper outboard leg (and, thus, the outboard brake shoe disposed adjacent thereto) are urged inwardly toward the outer side of the disc. As result, the brake shoes frictionally engage the opposed sides of the disc.

### SUMMARY OF THE INVENTION

This invention relates to an improved structure for a guide pin for a vehicle disc brake assembly, disc brake assembly including such a guide pin and method for producing a disc brake assembly including such a guide pin.

According to one embodiment, the disc brake assembly comprises: an anchor bracket having at least one bore formed therein, the bore defining a first axis; a brake caliper slidably secured to the anchor bracket; a pair of brake pads carried by the disc brake assembly; and at least one guide pin adapted to be disposed in the bore of the anchor bracket, the at least one guide pin defining a second axis; wherein when the at least one guide pin is disposed in the at least one bore of the anchor bracket, the second axis of the at least one guide pin is configured to be offset relative to the first axis of the at least one bore such that there is provided at least one defined point of contact between only a portion of a shank portion of the at least one guide pin and a portion of an inner surface of the at least one bore.

According to this embodiment of the disc brake assembly, the at least one spring-like member, which is formed separate from the at least one guide pin, is provided, and wherein the at least one spring-like member is operative to bias in a spring-like manner the at least one guide pin in the at least one bore thereby offsetting the second axis of the at least one guide pin relative to the first axis of the at least one bore.

According to this embodiment of the disc brake assembly, the at least one spring-like member is secured to one of the at least one guide pin and the at least one bore.

According to this embodiment of the disc brake assembly, the at least one spring-like member is formed from an elastomer material.

According to this embodiment of the disc brake assembly, the at least one spring-like member is a rubber bushing.

According to this embodiment of the disc brake assembly, the at least one spring-like member is a sheath-like member.

According to this embodiment of the disc brake assembly, the at least one spring-like member is disposed in a slot provided in the at least one guide pin.

According to this embodiment of the disc brake assembly, the at least one bore is a two-part bore including a first bore, which is configured to receive the at least one guide pin, and a second bore, which is configured to receive only at least a part of the at least one spring-like member.

According to this embodiment of the disc brake assembly, the at least one guide pin includes at least one lateral flat surface provided thereon on at least the shank portion thereof.

According to another embodiment, the disc brake assembly comprises: an anchor bracket having a pair of bores formed therein, the bore defining a first axis; a brake caliper slidably secured to the anchor bracket; a pair of brake pads carried by the disc brake assembly; and a pair of guide pins a respective one of which is adapted to be disposed in the bore of the anchor bracket, the at least one guide pin defining a second axis; wherein a pair of spring-like members, which are formed separate from the guide pins, is provided, and wherein when the guide pins are disposed in the bores of the anchor bracket, the second axis of the guide pins is configured to be offset relative to the first axis of the bores by the spring-like members such that there is provided at least one defined point of contact between only a portion of a shank portion of each of the guide pins and a portion of an inner surface of each of the bores.

According to this embodiment of the disc brake assembly, the spring-like members are secured to one of the guide pins and the bores.

According to this embodiment of the disc brake assembly, the spring-like members are formed from an elastomer material.

According to this embodiment of the disc brake assembly, the spring-like members are rubber bushings.

According to this embodiment of the disc brake assembly, the spring-like members are sheath-like members.

According to this embodiment of the disc brake assembly, the spring-like member is disposed in a slot provided in the guide pin.

According to this embodiment of the disc brake assembly, the bores are two-part bores each including a first bore, which is configured to receive the guide pins, and a second bore, which is configured to receive only at least a part of the spring-like members.

According to this embodiment of the disc brake assembly, the guide pins include at least one lateral flat surface provided thereon on at least the shank portion thereof.

According to still another embodiment, the disc brake assembly comprises: an anchor bracket having at least one bore formed therein, the bore defining a first axis; a brake caliper slidably secured to the anchor bracket; a pair of brake pads carried by the disc brake assembly; and at least one guide pin adapted to be disposed in the bore of the anchor bracket, the at least one guide pin defining a second axis; wherein a rubber bushing member, which is formed separate from the at least one guide pin, is provided, and wherein when the at least one guide pin is disposed in the at least one bore of the anchor bracket, the second axis of the at least one guide pin is configured to be offset relative to the first axis of the at least one bore by the rubber bushing member such that there is provided at least one defined point of contact between only a portion of a shank portion of the at least one guide pin and a portion of an inner surface of the at least one bore.

According to this embodiment of the disc brake assembly, the at least one spring-like member is secured to one of the at least one guide pin and the at least one bore.

According to this embodiment of the disc brake assembly, the at least one spring-like member is disposed in a slot provided in the at least one guide pin.

According to yet another embodiment, the disc brake assembly may comprise, individually and/or in combination, one or more of the following features: an anchor bracket having at least one bore formed therein, the bore defining a first axis; and a guide pin adapted to be disposed in the bore of the anchor bracket and configured to slidably support a brake caliper relative to the anchor bracket, the guide pin defining a second axis; wherein when the guide pin is disposed in the at least one bore of the anchor bracket, the second axis of the guide pin is configured to be offset relative to the first axis of the at least one bore such that there is provided at least one defined point of contact between only a portion of the guide pin and a portion of an inner surface of the at least one bore; wherein the guide pin includes at least one slot, the at least one slot having a member, which is formed separate from the guide pin, disposed therein and which is operative to bias the guide pin in the at least one bore thereby offsetting the second axis of the guide pin relative to the first axis of the at least one bore, wherein the member includes a first member formed from an elastomeric material and a second member formed from a metal material, wherein the second member is configured to retain the member in the slot.

According to this embodiment of the disc brake assembly, the member may be retained in the slot by a press-fit.

According to this embodiment of the disc brake assembly, the slot may be of a closed configuration and defines a first upper slot width at an upper open end thereof which is less than a second lower slot width at a lower closed bottom end thereof.

According to this embodiment of the disc brake assembly, the second member may be at least one metal strip.

According to this embodiment of the disc brake assembly, the metal strip may be a generally flat metal strip.

According to this embodiment of the disc brake assembly, metal strip may be a generally U-shaped metal strip.

According to this embodiment of the disc brake assembly, the metal strip may be a generally bow-shaped metal strip.

According to this embodiment of the disc brake assembly, second member may be a pair of metal strips disposed on opposed sides of the first member.

According to another embodiment, the disc brake assembly may comprise, individually and/or in combination, one or more of the following features: an anchor bracket having at least one bore formed therein, the bore defining a first axis; and a guide pin adapted to be disposed in the bore of the anchor bracket and configured to slidably support a brake caliper relative to the anchor bracket, the guide pin defining a second axis; wherein when the guide pin is disposed in the at least one bore of the anchor bracket, the second axis of the guide pin is configured to be offset relative to the first axis of the at least one bore such that there is provided at least one defined point of contact between only a portion of a shank portion of the guide pin and a portion of an inner surface of the at least one bore; wherein the guide pin includes at least one slot, the at least one slot having a member, which is formed separate from the guide pin, disposed therein and which is operative to bias the guide pin in the at least one bore thereby offsetting the second axis of the guide pin relative to the first axis of the at least one bore, wherein the member includes at least one first member formed from an elastomeric material and at least one second member formed from a metal material, wherein the at least one second member is secured to the at least one first member and the at least one second member is configured to deform to thereby retain the member in the slot.

According to this embodiment, the member may be retained in the slot by a press-fit.

According to this embodiment, the slot may be of a closed configuration and defines a first upper slot width at an upper open end thereof which is less than a second lower slot width at a lower closed bottom end thereof.

According to this embodiment, the at least one second member may be a generally flat metal strip.

According to this embodiment, the at least one second member may be a generally U-shaped metal strip.

According to this embodiment, the at least one second member may be a generally bow-shaped metal strip.

According to this embodiment, the at least one second member may be a pair of metal strips disposed on opposed sides of the first member.

According to another embodiment, a method for producing a disc brake assembly may comprise, individually and/or in combination, one or more of the steps of: (a) providing an anchor bracket having at least one bore formed therein, the bore defining a first axis; (b) providing a guide pin having at least one slot formed therein, the guide pin defining a second axis; (c) disposing a member, which is formed separate from the guide pin, in the slot, the member including a first member formed from an elastomeric material and a second member formed from a metal material; (d) following step (c), disposing the guide pin in the at least one bore of the anchor bracket wherein the member is operative to bias the guide pin in the at least one bore to thereby offset the second axis of the guide pin relative to the first axis of the at least one bore such that there is provided at least one defined point of contact between only a portion of the guide pin and a portion of an inner surface of the at least one bore, and wherein during at least one of the step (c) and the step (d) the second member is configured to deform to thereby retain the member in the slot.

According to this embodiment, during at least one of the step (c) and the step (d) the member may be retained in the slot by a press-fit.

According to this embodiment, the slot may be of a closed configuration and defines a first upper slot width at an upper open end thereof which is less than a second lower slot width at a lower closed bottom end thereof, wherein the metal strip is a generally flat metal strip prior to assembly and during at least one of the step (c) and the step (d) the metal strip may be permanently deformed to a generally U-shaped strip to retain the member in the slot.

According to this embodiment, the slot may be of a closed configuration and defines a first upper slot width at an upper open end thereof which is less than a second lower slot width at a lower closed bottom end thereof, wherein the metal strip is a generally U-shaped metal strip prior to assembly and during the at least one of the step (c) and the step (d) the metal strip may be permanently deformed to also a generally U-shaped metal strip to retain the member in the slot.

According to this embodiment, the slot may be of a closed configuration and defines a first upper slot width at an upper open end thereof which is less than a second lower slot width at a lower closed bottom end thereof, wherein the metal strip is a generally bow-shaped metal strip prior to assembly and during the step (d) the metal strip may be non-permanently deformed to retain the member in the slot.

According to yet another embodiment, the disc brake assembly may comprise, individually and/or in combination, one or more of the following features: an anchor bracket having at least one bore formed therein, the bore defining a first axis; and a guide pin adapted to be disposed in the at least one bore of the anchor bracket and configured to slidably support a brake caliper relative to the anchor bracket, the guide pin defining a second axis; wherein the guide pin includes at least one groove formed therein, the groove defining a third axis which is offset relative to the second axis of the guide pin, the at least one groove having a member disposed therein which is operative to bias the guide pin in the at least one bore whereby the second axis of the guide pin is offset relative to the first axis of the at least one bore such that there is provided at least one defined point of contact between only a portion of the guide pin and a portion of an inner surface of the at least one bore.

According to this embodiment, the member is a resilient member.

According to this embodiment, the member is an annular rubber bushing.

According to this embodiment, the guide pin includes a first end, a shank portion and an opposite second end, wherein the groove is formed at least in the shank portion.

According to this embodiment, the first end includes an indicia indicating means.

According to this embodiment, the at least bore defines an inner diameter and the shank portion of the guide pin defines an outer diameter which is less than the inner diameter of the at least one bore.

According to this embodiment, the at least one point of contact extends less than 180 degrees.

According to this embodiment, the first axis of the bore is located between the second axis of the guide pin and the third axis of the groove.

According to this embodiment, the member is a resilient member and includes a plurality of raised ribs, wherein only at least one of the plurality of raised ribs engage a portion of an inner diameter surface of the at least one bore and are compressed.

According to another embodiment, the disc brake assembly may comprise, individually and/or in combination, one or more of the following features: an anchor bracket having a bore formed therein, the bore defining a first axis; and a guide pin adapted to be disposed in the at least one bore of the anchor bracket and configured to slidably support a brake caliper relative to the anchor bracket, the guide pin defining a second axis; wherein the guide pin includes a groove formed therein, the groove defining a third axis which is eccentric relative to the second axis of the guide pin, the groove having a member disposed therein which is operative to bias the guide pin in the at least one bore whereby the second axis of the guide pin is eccentric relative to the first axis of the at least one bore such that there is provided at least one defined point of contact between only a portion of the guide pin and a portion of an inner surface of the at least one bore.

According to this embodiment, the member is a resilient member.

According to this embodiment, the member is an annular rubber bushing.

According to this embodiment, the guide pin includes a first end, a shank portion and an opposite second end, wherein the groove is formed at least in the shank portion.

According to this embodiment, the first end includes an indicia indicating means.

According to this embodiment, the bore defines an inner diameter and the shank portion of the guide pin defines an outer diameter which is less than the inner diameter of the bore.

According to this embodiment, the at least one point of contact extends less than 180 degrees.

According to this embodiment, the first axis of the bore is located between the second axis of the guide pin and the third axis of the groove.

According to this embodiment, the member is a resilient member and includes a plurality of raised ribs, wherein only at least one of the plurality of raised ribs engage a portion of an inner diameter surface of the bore and are compressed.

According to another embodiment, a guide pin adapted for use in a disc brake assembly may comprise, individually and/or in combination, one or more of the following features: a guide pin having a groove formed therein, the groove defining a first axis which is eccentric relative to a second axis of the guide pin, the groove having a member disposed therein which is configured to bias the guide pin in a bore of an anchor bracket of the disc brake assembly whereby the second axis of the guide pin is eccentric relative to the first axis of the at least one bore such that there is provided at least one defined point of contact between only a portion of the guide pin and a portion of an inner surface of the at least one bore.

According to this embodiment, the member is an annular rubber bushing, the guide pin includes a first end, a shank portion and an opposite second end, and the groove is formed at least in the shank portion.

Other advantages of this invention will become apparent to those skilled in the art from the following detailed description of the invention, when read in light of the accompanying drawings.

### BRIEF DESCRIPTION OF THE DRAWINGS

Fig. 1 is an exploded perspective view of a portion of a first embodiment of a vehicle disc brake assembly, including a first embodiment of a guide pin, constructed in accordance with the present invention.
Fig. 2 is a view of a portion of the vehicle disc brake assembly illustrated in Fig. 1.
Fig. 3 is a sectional view taken along line 3-3 of Fig. 2.
Fig. 3A is a view similar to Fig. 3 showing a further embodiment of a guide pin constructed in accordance with the present invention.
Figs. 4-6 are selected views of the guide pin illustrated in Figs. 1-3.
Figs. 7-10 are selected views of a second embodiment of a guide pin constructed in accordance with the present invention.
Fig. 11 is a perspective view of a third embodiment of a guide pin constructed in accordance with the present invention.
Figs. 12-14 are selected views of a fourth embodiment of a guide pin constructed in accordance with the present invention.
Figs. 15-16 are selected views of a fifth embodiment of a guide pin constructed in accordance with the present invention.
Figs. 17-18 are selected views of a sixth embodiment of a guide pin constructed in accordance with the present invention.
Fig. 19 is an exploded perspective view of a seventh embodiment of a guide pin constructed in accordance with the present invention.
Figs. 20-22 are selected views of an eighth embodiment of a guide pin constructed in accordance with the present invention.
Fig. 23 is an exploded perspective view of a ninth embodiment of a guide pin constructed in accordance with the present invention.
Fig. 24 is a perspective view, partially cut away, of a portion of a second embodiment of a vehicle disc brake assembly, including a tenth embodiment of a guide pin, constructed in accordance with the present invention.
Fig. 25 is an exploded perspective view of a portion of the vehicle disc brake assembly illustrated in Fig. 24.
Fig. 26 is a perspective view, partially cut away, of a portion of a third embodiment of a vehicle disc brake assembly, including an eleventh embodiment of a guide pin, constructed in accordance with the present invention.
Fig. 27 is an exploded perspective view of a portion of the vehicle disc brake assembly illustrated in Fig. 26.
Figs. 28-31 are selected views of a twelfth embodiment of a guide pin constructed in accordance with the present invention.
Fig. 32 is a perspective view of a portion of a thirteenth embodiment of a guide pin constructed in accordance with the present invention.
Fig. 33 is a plan view, partly shown in phantom, of a first arrangement of the first embodiment of the vehicle disc brake assembly, including the first embodiment of a guide pin.
Fig. 34 is a plan view, partly shown in phantom, of a second arrangement of the first embodiment of the vehicle disc brake assembly, including the first embodiment of a guide pin.
Fig. 35 is a plan view, partly shown in phantom, of a third arrangement of the first embodiment of the vehicle disc brake assembly, including the first embodiment of a guide pin.
Fig. 36 is a plan view, partly shown in phantom, of a fourth arrangement of the first embodiment of the vehicle disc brake assembly, including the first embodiment of a guide pin.
Fig. 36a is a plan view, partly shown in phantom, of a fifth arrangement of the first embodiment of the vehicle disc brake assembly, including the first embodiment of a guide pin.
Fig. 37 is a view similar to Fig. 2 of a portion of a vehicle disc brake assembly including a fourteenth embodiment of a guide pin, constructed in accordance with the present invention.
Fig. 38 is a sectional view taken along line 38-38 of Fig. 37.
Figs. 39-41 are selected views of the fourteenth embodiment of the guide pin illustrated in Figs. 37 and 38.
Fig. 42 is a view similar to Fig. 41 showing a fifteenth embodiment of a guide pin constructed in accordance with the present invention and prior to installation.
Fig. 43 is a view similar to Fig. 41 showing a sixteenth embodiment of a guide pin constructed in accordance with the present invention and prior to installation.
Fig. 44 is a perspective view showing a seventeenth embodiment of a guide pin constructed in accordance with the present invention and prior to installation.
Fig. 45 is a view similar to Fig. 41 showing an eighteenth embodiment of a guide pin constructed in accordance with the present invention and prior to installation.
Fig. 46 is a view of the eighteenth embodiment of the guide pin showing the guide pin in an installed position in a portion of an associated vehicle disc brake assembly.
Fig. 47 is a view of a portion of the eighteenth embodiment of the guide pin shown in Figs. 45 and 46.
Fig. 48 is an exploded perspective view of a portion of an embodiment of a vehicle disc brake assembly, including a nineteenth embodiment of a guide pin, constructed in accordance with the present invention.
Fig. 49 is a view of the guide pin shown in Fig. 48, without a bushing installed thereon.
Fig. 50 is a view of the guide pin shown in Fig. 48, with the bushing installed thereon.
Fig. 51 is a schematic view for discussion purposes generally taken in the direction of line 51-51 of Fig. 50, and also showing the guide pin installed in a bore of a component of the vehicle disc brake assembly.
Fig. 52 is a schematic view for discussion purposes similar to Fig. 51 showing a twentieth embodiment of a guide pin constructed in accordance with the present invention.

### DETAILED DESCRIPTION OF THE PREFERRED EMBODIMENTS

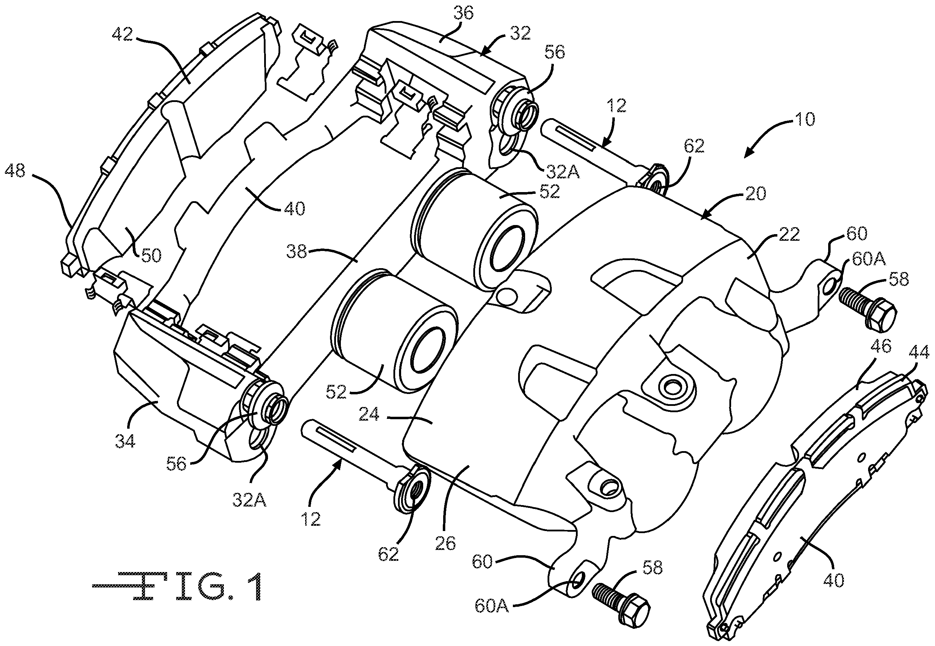

Referring now to Fig. 1, there is illustrated a portion of a vehicle disc brake assembly, indicated generally at 10, including an embodiment of a guide pin, indicated generally at 12, in accordance with the present invention. The general structure and operation of the prior art disc brake assembly 10 is conventional in the art. Thus, only those portions of the prior art disc brake assembly 10 which are necessary for a full understanding of this invention will be explained and illustrated. Also, although this invention will be described and illustrated in connection with the particular disc brake assembly 10 disclosed herein, it will be appreciated that this invention may be used in connection with other types or kinds of disc brake assemblies, such as for example, as generally shown in U.S. Patent No. 8.051,958 to Rockwell et al., U.S. Patent No. 6,039,156 to Schneider, and U.S. Patent No. 5,927,446 to Evans, the disclosures of each of these patents incorporated herein by reference in their entirety, and/or in connection with other types of kinds of "pin guided" or "pin sliding" disc brake assemblies, if so desired.

As shown in the illustrated embodiment of Fig. 1, the disc brake assembly 10 is a pin guided or pin sliding type of disc brake assembly and includes a generally C-shaped caliper, indicated generally at 20. The caliper 20 includes an inboard leg portion 22 and an outboard leg portion 24 which are interconnected by an intermediate bridge portion 26. The caliper 20 is slidably supported on a pair of the guide pins 12 which are secured to an anchor bracket, indicated generally at 32. The anchor bracket 32 is, in turn, secured to a stationary component of the vehicle by suitable fasteners, such as for example bolts (not shown), which extend through openings 32A provided in the anchor bracket 32. Such a stationary component can be, for example, an axle flange (not shown), when the disc brake assembly 10 is installed for use on the rear of the vehicle, or a steering knuckle (not shown), when the disc brake assembly 10 is installed for use on the front of the vehicle.

In the illustrated embodiment, the anchor bracket 32 includes a pair of axially and outwardly extending arms 34 and 36 which are interconnected at their inboard ends by an inner tie bar 38 and which are interconnected at their outboard ends by an outer tie bar 40. The arms 34 and 36 each have a pair of generally C-shaped channels 38 formed thereon. The channels 38 are provided to slidably support an inboard brake shoe, indicated generally at 40, and an outboard brake shoe, indicated generally at 42, thereon. Alternatively, the construction and/or configuration of the anchor bracket 32 may be other than illustrated and described if so desired.

In the illustrated embodiment, the inboard brake shoe 40 includes a backing plate 44 and a friction pad 46. The inboard backing plate 44 includes opposed ends having tabs or protrusions 44A formed thereon, for supporting the inboard brake shoe 40 in the channels 38 of the anchor bracket 32. The outboard brake shoe 42 includes a backing plate 48 and a friction pad 50. The outboard backing plate 48 includes opposed ends having tabs or protrusions 48A formed thereon, for supporting the outboard brake shoe 32 in the channels 38 of the anchor bracket 32. Alternatively, the construction and/or supporting of one or both of the brake shoes 40 and 42 may be other than illustrated and described if so desired. For example, the inboard brake shoe 40 can be supported on a brake piston/pistons 52 of the disc brake assembly 10, and/or the outboard brake shoe 42 can be supported on the outboard leg portion 24 of the caliper 20.

In the illustrated embodiment, an actuation means (not shown) is provided for effecting the operation of the disc brake assembly 10. In the illustrated embodiment, the actuation means includes the pair of brake pistons 52 each of which is disposed in a counterbore or recess (not shown), formed in an outboard surface of the inboard leg 22 of the caliper 20. The actuation means can be hydraulic, electrical, pneumatic, and mechanical types.

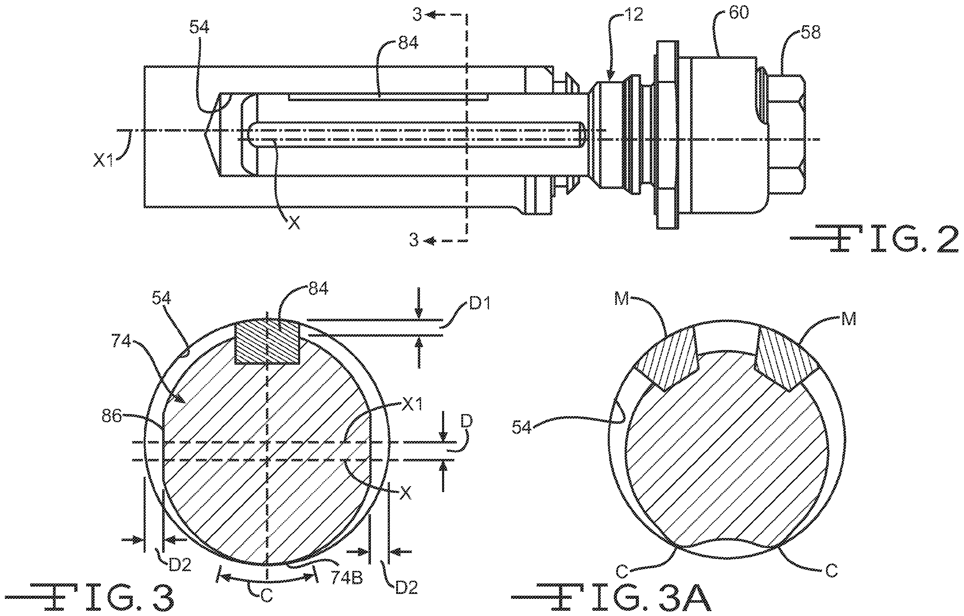

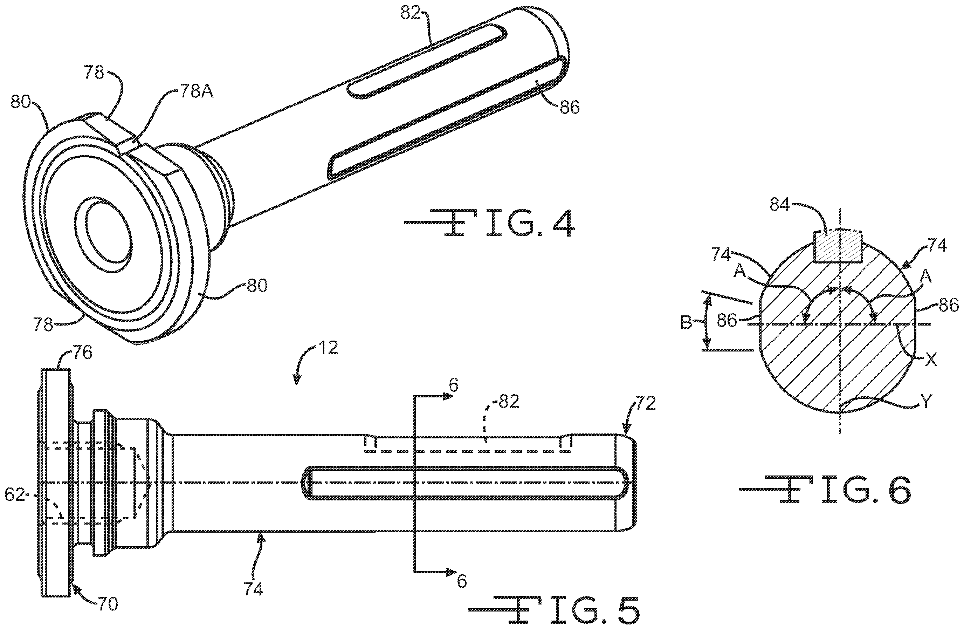

As shown in Fig. 1, each of the guide pins 12, which will be discussed below in detail, is disposed in a non-threaded bore 54 (shown in Figs. 2 and 3), provided in each of the arms 34 and 36 of the anchor bracket 32. A boot seal 56 is preferably installed in each of the opening 54 through which each of the guide pins 12 extend. A pair of threaded fasteners 58 are provided to slidably secure the caliper 20 to the anchor bracket 32. The fasteners 58 extend through openings 60A provided in lugs or ears 60 of the caliper 20 and are installed in an internally threaded bore 62 (shown in Figs. 1 and 5), provided in each guide pin 12.

Turning now to Figs. 2-6, the construction of the first embodiment of the guide pin 12 will be discussed in detail. In the illustrated embodiment, each of the guide pins 12 is preferably identical to one another and includes a first end, indicated generally at 70, which defines a head portion. The guide pin 12 further includes a second end, indicated generally at 72, which defines a lead-in portion, and a center section, indicated generally at 74, which defines a shank portion.

In the illustrated embodiment, the head 70 preferably includes the internally threaded bore 62 provided therein. The head 70 preferably further includes a flange 76 having a pair of opposed planar or flat surfaces 78 provided thereon and a pair of arcuate surfaces 80 disposed between the opposed flat surfaces 78. In the illustrated embodiment, one of the flat surfaces 78 preferably includes an indicia or other suitable identifying feature 78A provided therein or thereon for a purpose to be discussed below. In the illustrated embodiment, the indicia 78A is V-shaped notch provided in one of the flat surfaces 78. Alternatively, the construction and/or configuration of the head 70 may be other than illustrated and described if so desired. For example, the head 70 would not have the internally threaded bore if stud type guide pins are used.

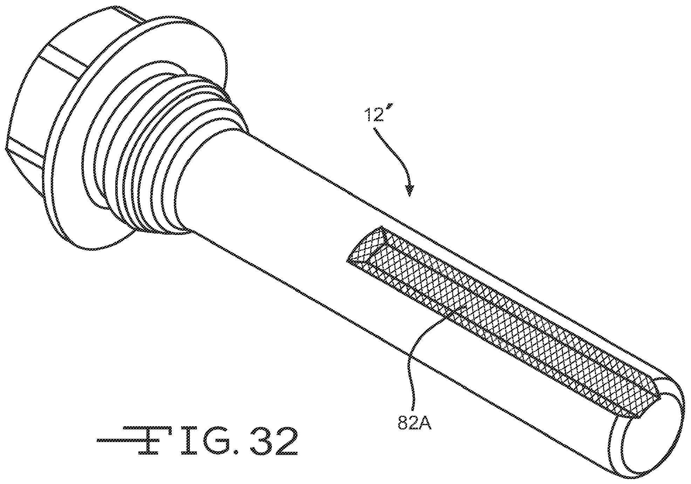

In the illustrated embodiment, the shank portion 74 is annular, defines a first axis Y and a second axis X, and preferably includes a slot or recess 82 provided therein along at least a portion thereof. Preferably, as illustrated, the slot 82 and the indicia 78A are in alignment with one another so that the orientation of the guide pin 12 in the bore 54 of the caliper 12 can be set to a desired predetermined orientation therewithin. The slot 82 is configured to receive a "spring-like" bushing or member 84 therein for a purpose to be discussed below. In the illustrated embodiment, the member 84 is preferably an elastomeric or rubber member and is preferably permanently attached to the guide pin 12 by suitable means, such as for example, by bonding, gluing or the like. To assist in the securing of the member 84 in the slot 82, the slot 82 can be provided with a knurled surface, such as for example shown in Fig. 32 by reference number 82A in connection with an embodiment of a guide pin 12', if so desired. As shown in Fig. 6, when the member 84 is secured to the guide pin 12 a portion of the member 84 extends outwardly from the slot 82 beyond an outer diameter surface 74A of the shank portion 74 of the guide pin 12 for a purpose to be discussed below. However, the member 84 can be formed from other suitable materials which are operative to provide a spring-like biasing effect. For example, such other suitable materials can include a metal material which preferably can be riveted, welded, pressed in or otherwise attached, and/or can be a plastic or metal insert or spring-like member.

In the illustrated embodiment, the guide pin 12 preferably further includes a pair of "lateral flat" surfaces or features 86 provided thereon. In the illustrated embodiment, the flat surfaces 86 are preferably formed so as to extend from near the second end 72 and toward the first end 70 so as to be provided in a substantial portion of the shank portion 74 of the guide pin 12. Preferably, as shown in the illustrated embodiment, the flat surfaces 86 are each spaced at a same angle A relative to a first axis Y of the guide pin 12 (which axis Y is also a center axis of the slot 82), and each flat surface 86 extends a predetermined angular distance B. In the illustrated embodiment, the angle A is approximately 90 degrees and the angular distance B is approximately 40 degrees. Alternatively, the construction of the guide pin 12 may be other than illustrated and described if so desired. For example, the configuration, number, location and/or orientation of one or more of the first end 70, the second end 72, the shank portion 74, the recess 82, the flat surfaces 86, and/or the angles A and/or B may be other than illustrated and described if so desired.

As best shown in Fig. 3, when the disc brake assembly is fully assembled and the guide pin 12 is in the installed normal position, the member 84 is configured to engage only a portion of the bore 54 and to be compressed within the bore 54 so as to be operative to offset the axis X of the guide pin 12 relative to an axis X1 of the bore 54 a distance D. In the illustrated embodiment, the distance D is preferably in the range from about 0.05 mm to about 0.15 mm.

At the same time, the member 84 is operative to bias - in a spring-like manner - only a portion 74B of an outer surface of the shank portion 74 of the guide pin 12 in "defined" contact with the bore 54. As used herein, the term "defined contact" or "defined point of contact" means a defined point, line or area of contact defined between the portion 74B of the shank portion 74 and a portion of the bore 54. In the illustrated embodiment, the defined contact between the portion 74B and the bore 54 extends an angular distance C. The angular distance C is preferably in the range from about 1-2 degrees to about 88-89 degrees. More preferably, the range is from about 15 degrees to about 60 degrees. Even more preferably the range is from about 30 degrees to about 45 degrees.

Alternatively, the construction of the guide pin 12 and/or associated parts of the disc brake assembly 10 may be other than illustrated and described if so desired. For example, the configuration, number, location and/or orientation of one or more of the first end 70, the second end 72, the shank portion 74, the recess 82, the flat surfaces 86, the angles A, B and/or C, and/or the distances D, D1 and/or D2 may be other than illustrated and described, if so desired. For example, the member 84 may be formed from other materials so long as the material is operative to provide a spring-like or similar biasing feature to that of the rubber material. Also, more than one member 84 can be provided and/or more than one defined points of contact can be provided between the associated surfaces of the guide pin and the bore. Fig. 3A shows an embodiment having two members M and two defined points of contact C. Thus, as can be readily understood, there are many different configurations possible having at least one or more of such members M and one or more of such defined points of contact C. Also, as can be readily understood, the present invention can be used in connection with other attachment styles of guide pins if so desired.

Also, as can be seen in Fig. 3, the member 84 is operative to provide a first or "radial" guide pin clearance D1 between the bore 54 and the outer diameter surface 74A of the shank portion 74 of the guide pin 12. The clearance D1 is preferably in the range from about 0.10 mm to about 0.30 mm. Further, a second or "tangential" guide clearance D2 is provided between the flat surfaces 86 of the shank portion 74 of the guide pin 12 and the bore 54. The clearance D2 is preferably in the range from about 0.05 mm to about 0.15 mm.

Alternatively, the construction of the guide pin 12 and/or associated parts of the disc brake assembly 10 may be other than illustrated and described if so desired. For example, the configuration, number, location and/or orientation of one or more of the first end 70, the second end 72, the shank portion 74, the recess 82, the flat surfaces 86, the angles A, B and/or C, and/or the distances D, D1 and/or D2 may be other than illustrated and described, if so desired.

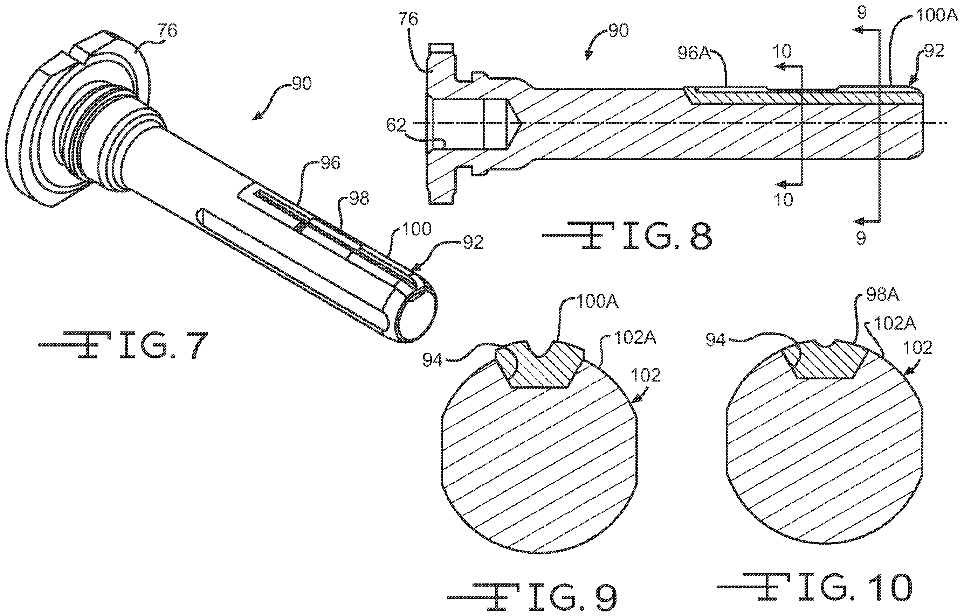

Turning now to Figs. 7-10 and using like reference numbers to indicate corresponding or similar parts, there is illustrated a second embodiment of a guide pin, illustrated generally at 90. As shown in this embodiment, a member 92 is disposed and secured in a slot 94 provided in the guide pin 90. The member 92 includes a segmented body preferably having a first end portion 96, at least one intermediate portion 98, and a second end portion 100. Preferably, the at least one intermediate portion 98 is provided to function to retain and distribute a lubrication grease or fluid which is preferably provided. Also, the intermediate portion 98 provides a "circumferential" path of grease flow during "high" anchor bracket deflection and contains the grease to maintain a lubrication in the path of the members 92 as the associated guide pins 90 extend from the bore to accommodate pad wear.

As can best seen in Fig. 9, the second end portion 100 includes an outer surface 100A which extends outwardly and beyond an outer surface 102A of the shank portion 102 of the guide pin 90 prior to assembly. Similarly, the first end portion 96 includes an outer surface 96A which extends outwardly and beyond an outer surface 102A of the shank portion 102 of the guide pin 90 prior to assembly. The intermediate portion 98 includes an outer surface 98A which is generally complimentary to the outer surface 102A of the shank portion 102 of the guide pin 90 prior to assembly. As can be readily understood, the outer surfaces 96A and 100A of the member 92 are configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore.

Further, in the illustrated embodiment, a notch or V-shaped groove is preferably provided along in the member 92 along the associated outer surfaces 96A, 98A and 100A thereof. As can be readily understood, the function and operation of the guide pin 90 is similar to that of the guide pin 12 discussed above. Alternatively, the construction of the guide pin 90 may be other than illustrated and described if so desired.

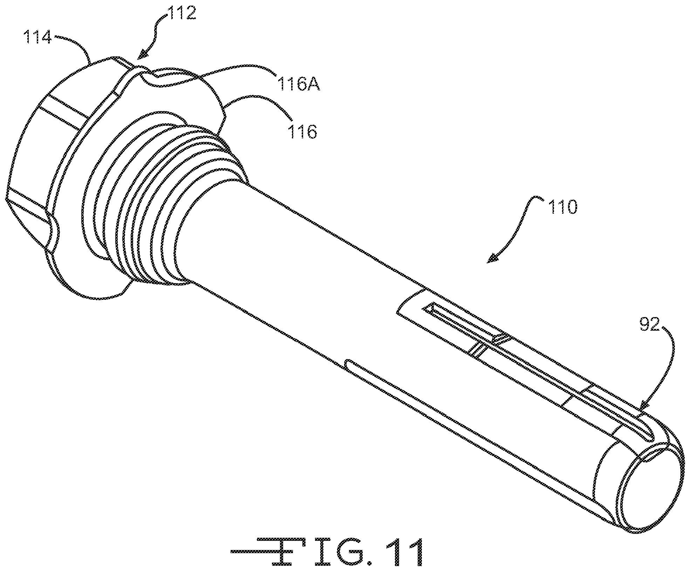

Turning now to Fig. 11 and using like reference numbers to indicate corresponding or similar parts, there is illustrated a third embodiment of a guide pin, illustrated generally at 110. This embodiment is similar to the guide pin 90 illustrated in Figs. 7-10 except that in this embodiment a first end 112 of the guide pin 110 is provided with a hexagonal-shaped head 114 and a flange 116 is provided thereon. The flange 116 is provided with an indicia 116A, illustrated as being a raised tab, with the tab 116A being aligned with the member 92. As can be readily understood, the function and operation of the guide pin 110 is similar to that of the guide pin 12 discussed above. Alternatively, the construction of the guide pin 110 may be other than illustrated and described if so desired.

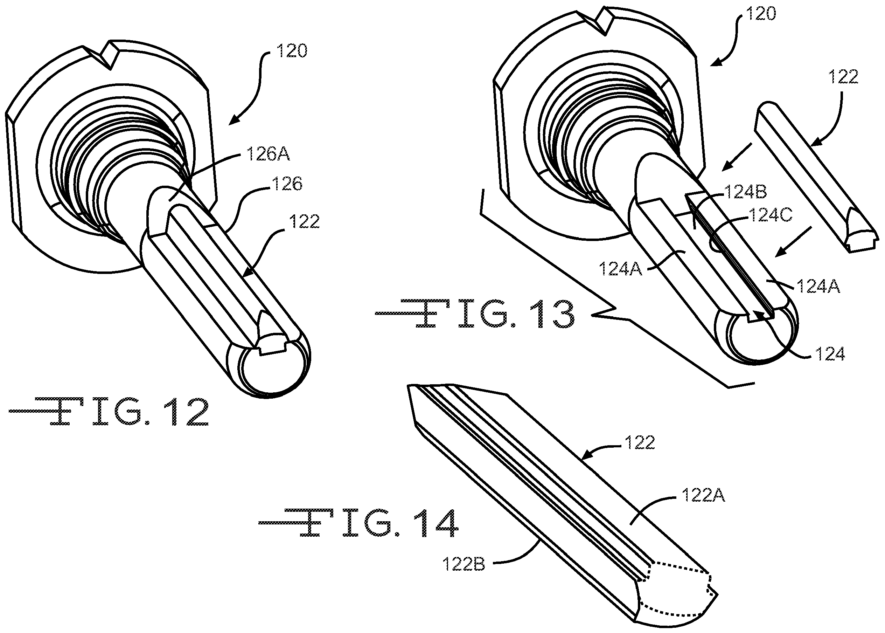

Turning now to Figs. 12-14 and using like reference numbers to indicate corresponding or similar parts, there is illustrated a fourth embodiment of a guide pin, illustrated generally at 120. As shown in this embodiment, a member 122 is disposed and secured in a slot 124 provided in the guide pin 120. The member 122 includes a first "inner" portion 122A, configured to be disposed and secured in the slot 124, and a second "outer" portion 122B, configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore.

The slot 124 includes a pair of opposed spaced flat or planar surfaces 124A and a flat or planar surface 124B which is located between and recessed relative to the surfaces 124A. The side walls 124C of the slot 124 can be slightly tapered inwardly as illustrated to assist in the retention of the member 122 therewithin if so desired. As can be seen best in Fig. 14, the member 122 is provided with a portion 122A which is shaped complimentary to that of the slot 124. As can be readily understood, the exact geometry of the slot 124, and therefore of the member 124, can be readily modified to accommodate manufacturing.

Also, as shown, a portion 126A of a shank portion 126 of the guide pin 120 can be tapered or angled to facilitate the molding of the member 122 to the guide pin 120 if so desired. As can be readily understood, the function and operation of the guide pin 120 is similar to that of the guide pin 12 discussed above. Alternatively, the construction of the guide pin 120 may be other than illustrated and described if so desired.

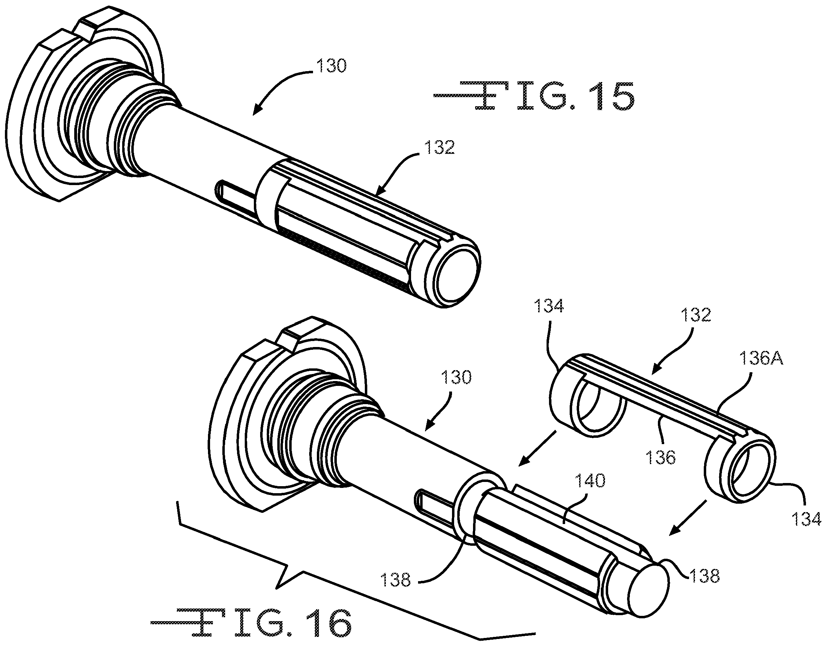

Turning now to Figs. 15 and 16 and using like reference numbers to indicate corresponding or similar parts, there is illustrated a fifth embodiment of a guide pin, illustrated generally at 130. As shown in this embodiment, a member 132 includes a pair of opposed ring portions 134 interconnected by an intermediate body "strip" portion 136. The rings portions 134 are configured to be disposed and secured in annular slots 138 formed in the guide pin 130, and the body portion 136 is configured to be disposed in a slot 140 provided in the guide pin 130.

As can be readily understood, at least an outer surface 136A of the body portion 136 of the member 132 is configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore. As can be readily understood, the function and operation of the guide pin 130 is similar to that of the guide pin 12 discussed above. Alternatively, the construction of the guide pin 130 may be other than illustrated and described if so desired.

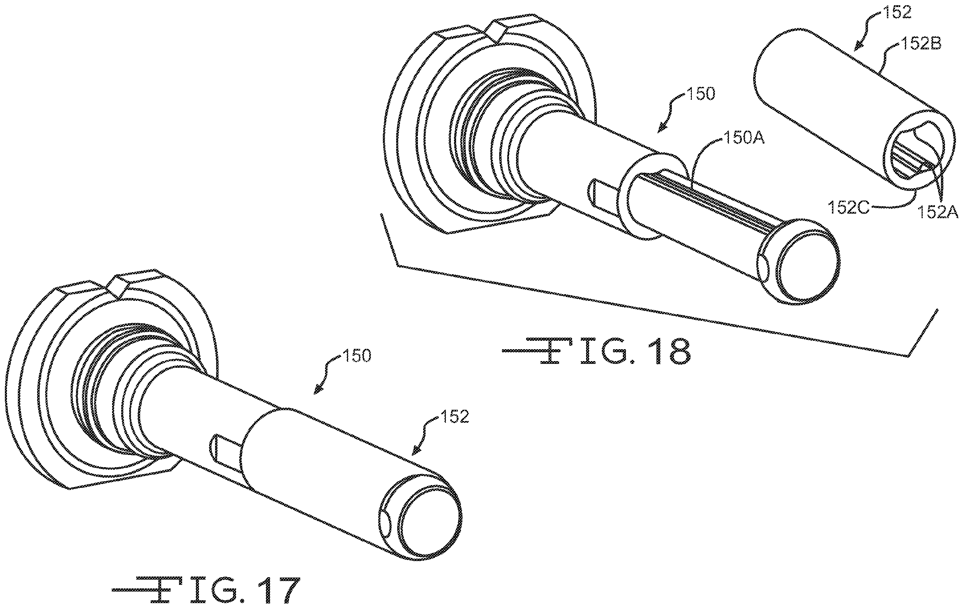

Turning now to Figs. 17 and 18 and using like reference numbers to indicate corresponding or similar parts, there is illustrated a sixth embodiment of a guide pin, illustrated generally at 150. As shown in this embodiment, a member 152 is provided which is of a sheath-like or hollow cylindrical structure having opposed inner tongue-like members 152A. The members 152A are configured to be disposed and secured in complimentary shaped slots 150A (only one of the two slots 150A being illustrated), formed in opposed sides of the guide pin 150.

In the illustrated embodiment, there is provided more thickness of the member 152 at a first outer surface 152B compared to that provided at an opposite second outer surface 152C. As a result of this, the first outer surface 152B is configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore. As can be readily understood, the function and operation of the guide pin 150 is similar to that of the guide pin 12 discussed above. Alternatively, the construction of the guide pin 150 may be other than illustrated and described if so desired.

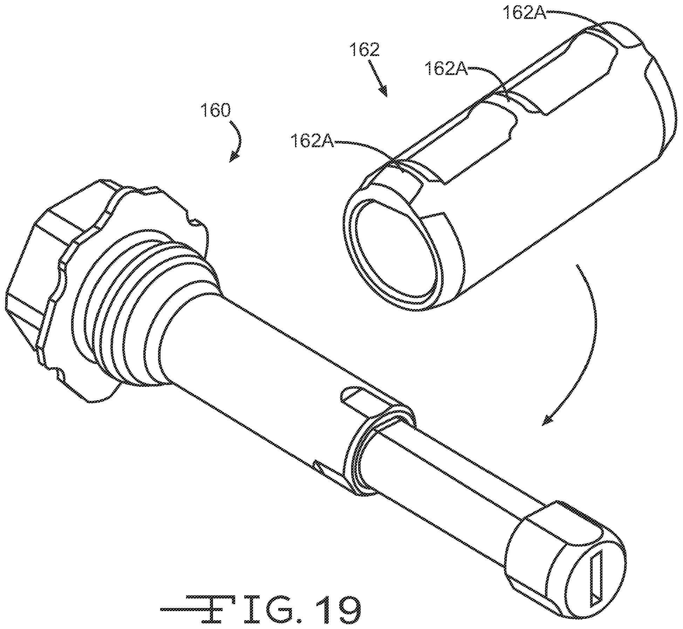

Turning now to Fig. 19 and using like reference numbers to indicate corresponding or similar parts, there is illustrated a seventh embodiment of a guide pin, illustrated generally at 160. In this embodiment a spring-like member 162 is provided which includes a segmented body having an outer surface which is provided with a plurality of aligned spaced apart raised tabs 162A thereon. As can be readily understood, the tabs 162A of the member 162 are configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore. As can be readily understood, the function and operation of the guide pin 160 is similar to that of the guide pin 12 discussed above. Alternatively, the construction of the guide pin 160 may be other than illustrated and described if so desired.

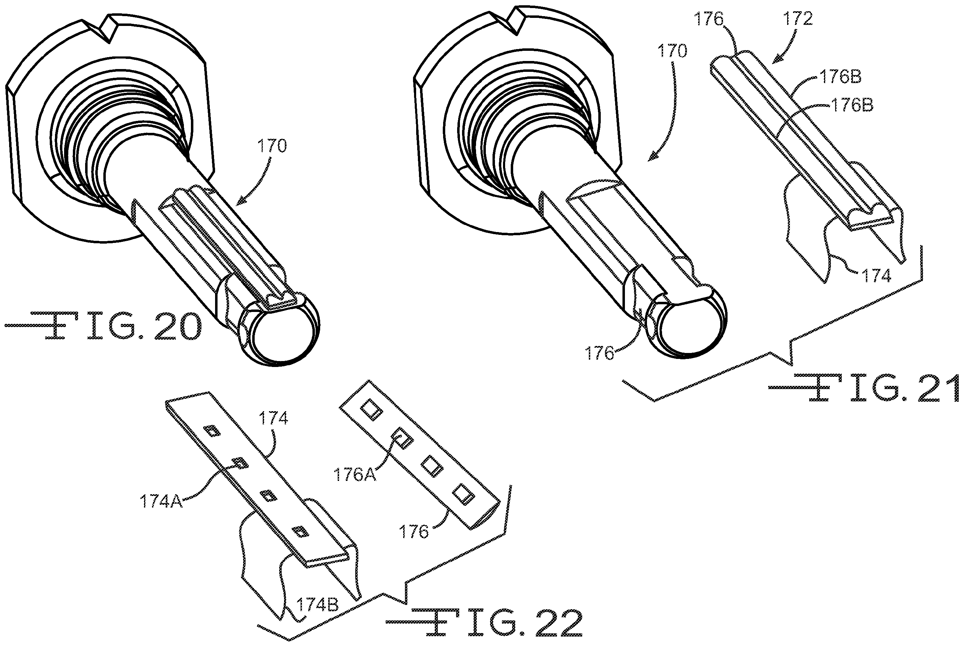

Turning now to Figs. 20-22 and using like reference numbers to indicate corresponding or similar parts, there is illustrated an eighth embodiment of a guide pin, illustrated generally at 170. In this embodiment a two-piece spring-like member 172 is provided which includes a generally first or clip member 174 and a second spring like member 176 secured thereto. To accomplish this, the member 174 includes cut-outs 174A and the member 176 includes tabs 176 which are disposed in the cut-outs 174A to secure the members 174 and 176 together.

The member 174 further includes a clip portion 174B which is configured to secure the member 172 to the guide pin 170 in a mechanical "snap-fit" therewith via a slot 176 provided therein. As can be readily understood, a pair of raised surface portions 176B of the member 176 are configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore. As can be readily understood, the function and operation of the guide pin 170 is similar to that of the guide pin 12 discussed above. Alternatively, the construction of the guide pin 170 may be other than illustrated and described if so desired.

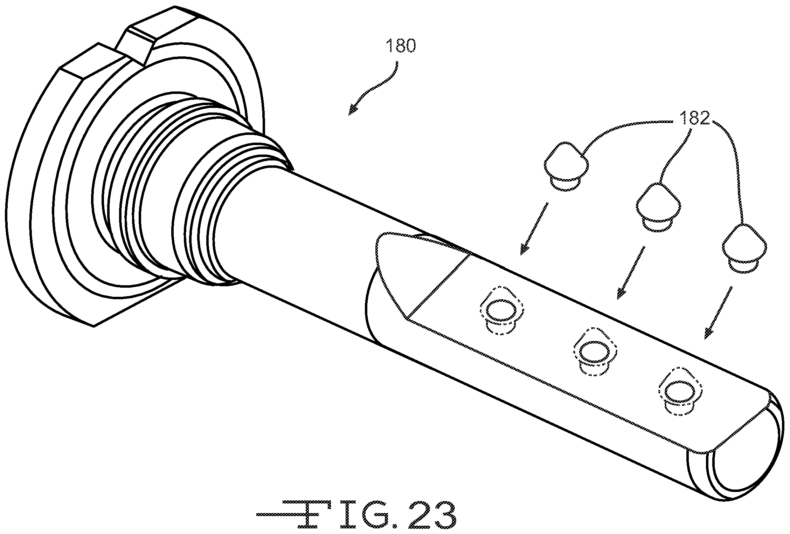

Turning now to Fig. 23 and using like reference numbers to indicate corresponding or similar parts, there is illustrated a ninth embodiment of a guide pin, illustrated generally at 180. In this embodiment a plurality of spring-like "mushroom-shaped" members 182 are secured in openings provided in the guide pin 180. As can be readily understood, the members 182 are configured to contact a portion of the bore of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore. Alternatively, the construction of the guide pin 180 may be other than illustrated and described if so desired.

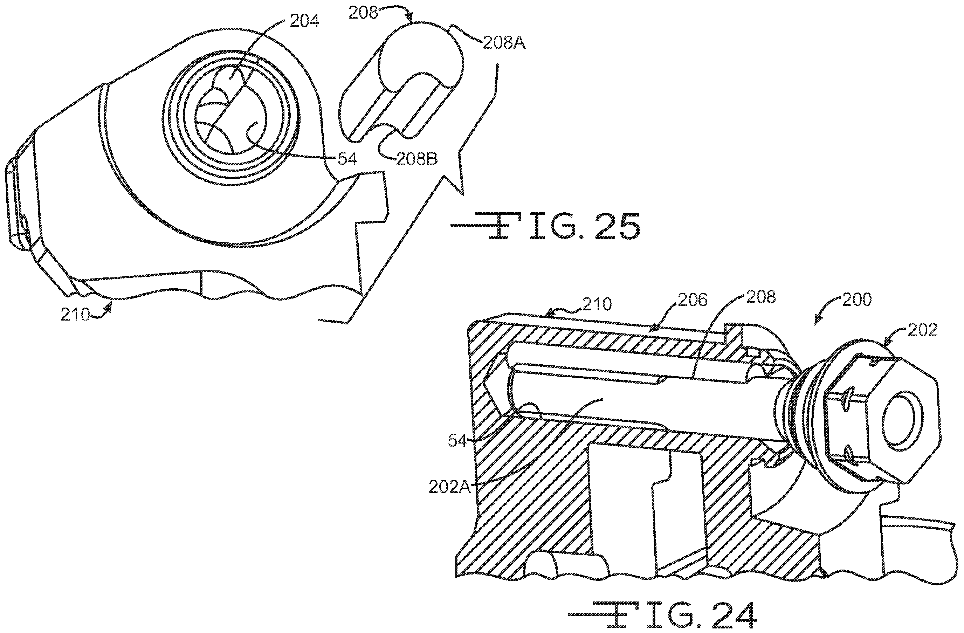

Referring now to Figs. 24 and 25 and using like reference numbers to indicate corresponding or similar parts, there is illustrated a portion of a second embodiment of a vehicle disc brake assembly, indicated generally at 200, including a tenth embodiment of a guide pin, indicated generally at 202, constructed in accordance with the present invention. In this embodiment, in addition to the bore 54, there is provided a "second smaller" hole or bore 204 in each of a pair of arms 206 and 208 of an anchor bracket 210 of the vehicle disc brake assembly 200. As shown in Figs. 24 and 25, the hole 204 is formed to intersect and be coaxially offset relative to the bore 54.

In the illustrated embodiment, a spring-like member 208 is disposed in each of the holes 204. The member 208 is provided with a first or "outer rounded" surface 208A which is complimentary to the shape of the hole 204, and a second or "inner rounded" surface 208B which is complimentary to the shape of a shank portion 202A of the guide pin 202. As can be readily understood, the members 208 are configured to contact the hole 204 of the arm of the associated anchor bracket to provide a spring-like biasing effect as described above in connection with the guide pin 12 which offsets the axis of the guide pin relative to the bore and thereby produces a defined point of contact between only a portion of an outer surface of the guide pin and the bore 54. Alternatively, the construction of the guide pin 202, the member 206 and/or the anchor bracket 210 may be other than illustrated and described if so desired.

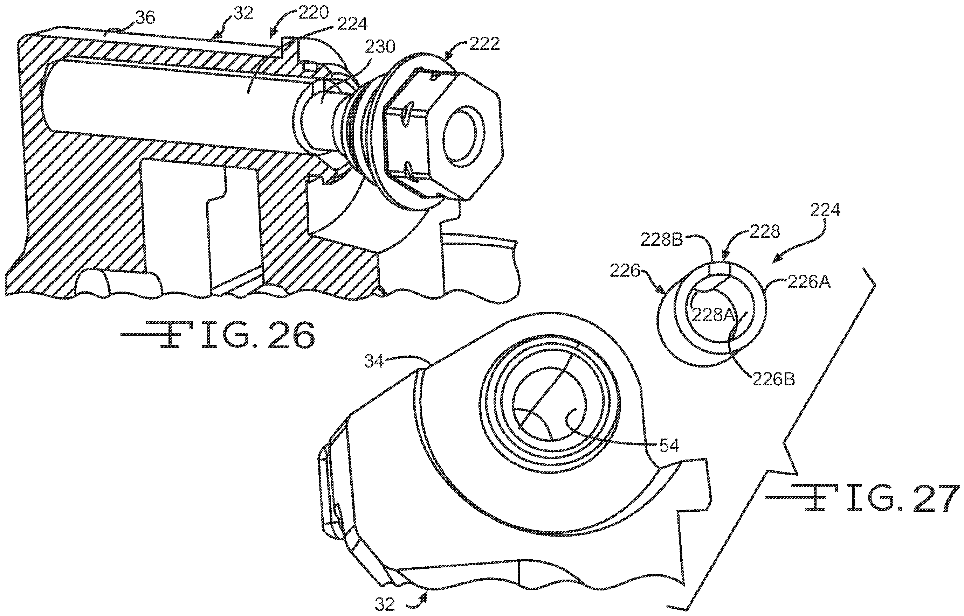

Referring now to Figs. 26 and 27 and using like reference numbers to indicate corresponding or similar parts, there is illustrated a portion of a portion of a vehicle disc brake assembly, indicated generally at 220, including an eleventh embodiment of a guide pin, indicated generally at 222, constructed in accordance with the present invention.

In this embodiment, a member 224 is provided comprised of a first or sheath-like member 226 and a second or spring-like member 228. The second member 228 includes an inwardly extending or concave portion 228A which extends inwardly beyond an inner diameter surface 226B of the first member 226. The first member 226 is preferably formed from a rigid material, such as for example steel or "hard" plastic, and the second member 228 is preferably formed from an elastomeric or rubber or other suitable material, if so desired. Preferably, the second 228 is molded in situ with the first member 226 during its manufacturing process.

In the illustrated embodiment, the first member 226 is preferably disposed in the bore 54 by a press or interference fit therewith to provide solid contact between an outer diameter surface 226A of the first member 226, and outer diameter surface 228B of the second member 228, and the bore 54.

In the illustrated embodiment, an inner diameter surface 226B of the first member 226 is at least slightly greater than a outer diameter surface of a shank portion 230 of the guide pin 222. As can be readily understood, the portion 228A of the second member 228 of the member 224 is operative to provide a spring-like biasing effect as described above in connection with the guide pin 12 which offsets the axis of the guide pin relative to the bore and thereby produces a defined point of contact between only a portion of an outer surface of the guide pin and an inner surface 226B of the first member 226 of the member 224. Alternatively, the construction of the guide pin 222 and/or the member 224 may be other than illustrated and described if so desired.

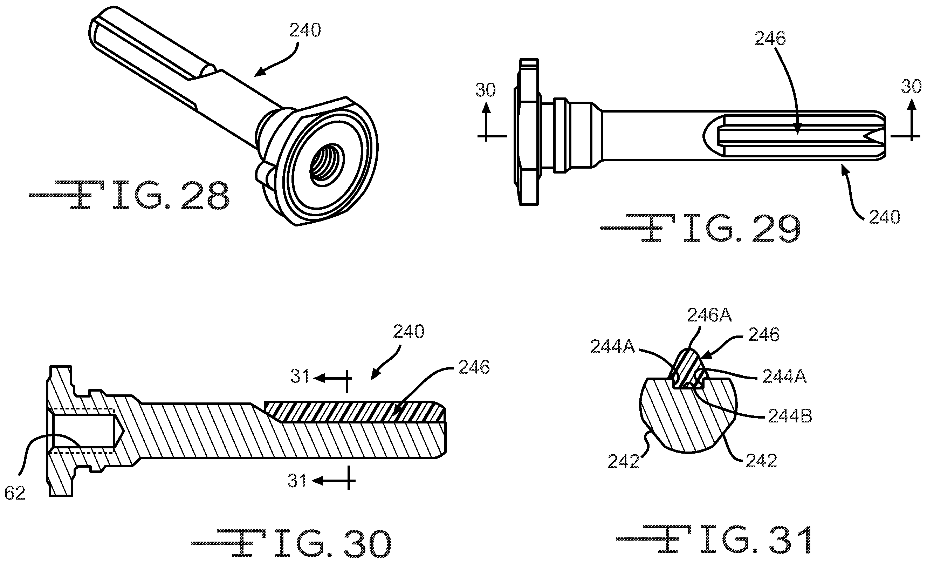

Referring now to Figs. 28-31 and using like reference numbers to indicate corresponding or similar parts, there is illustrated a twelfth embodiment of a guide pin, illustrated generally at 240. This embodiment is generally similar to the guide pin 120 illustrated in Figs. 12-14 except that in this embodiment the guide pin 240 includes a pair of flat surfaces 242. In addition, a slot 244 in the guide pin 240 has side walls 244A which are generally perpendicular to a bottom wall 244B thereof. Further, a spring-like member 246 has a slightly more cone-shaped outer profile 246A compared to that of the member 122 shown in Figs. 12-14. As can be readily understood, the function and operation of the guide pin 240 is similar to that of the guide pin 12 discussed above. Alternatively, the construction of the guide pin 240 may be other than illustrated and described if so desired.

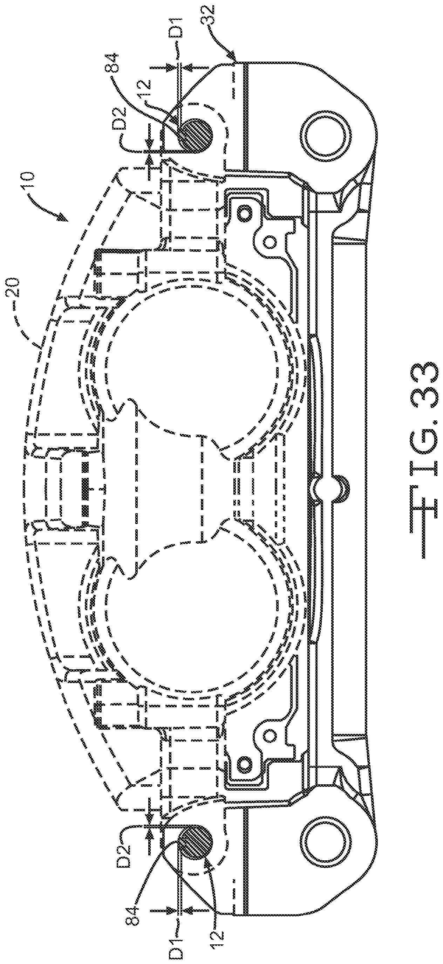

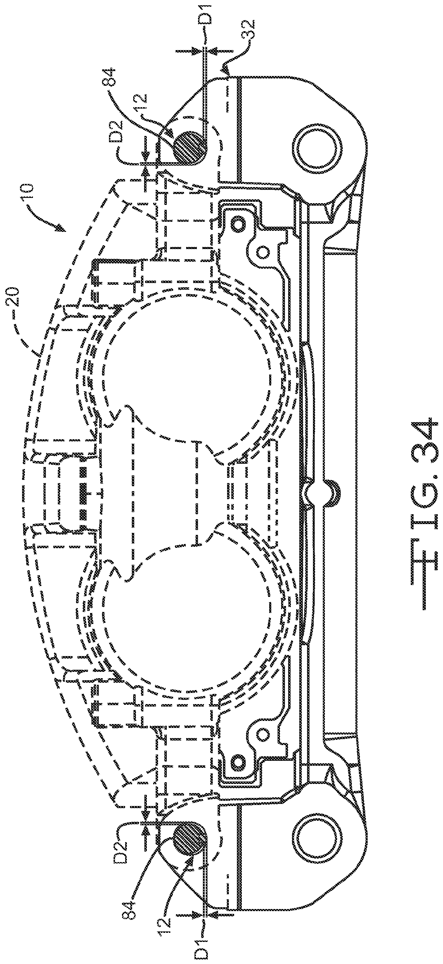

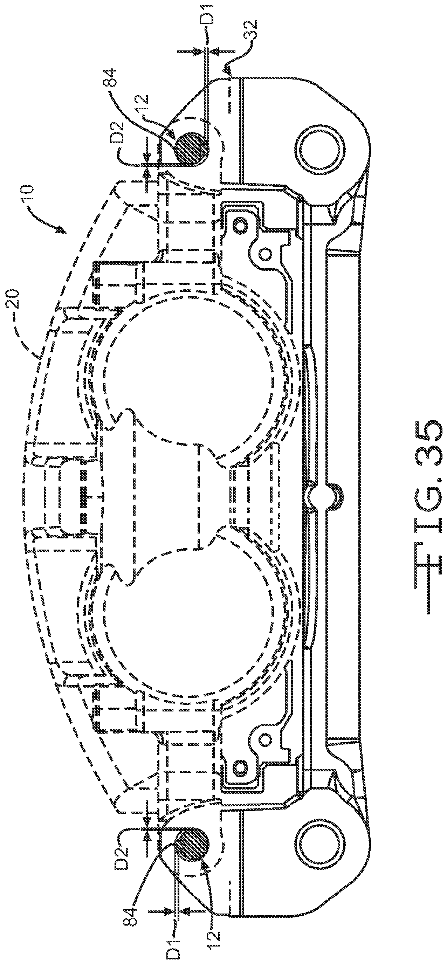

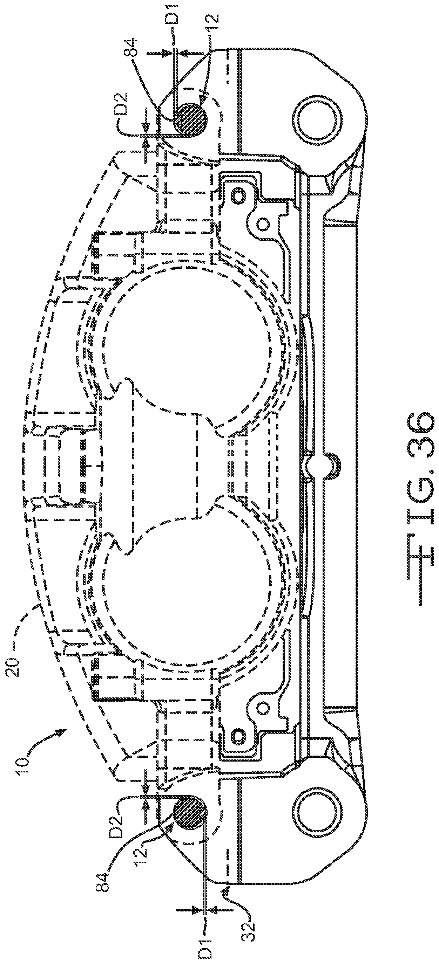

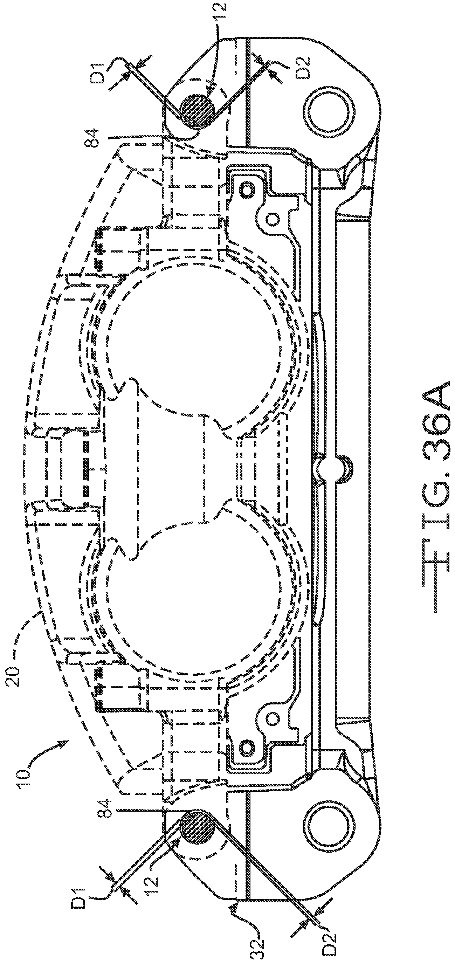

Referring now to Figs. 33-36, there are illustrated views showing possible arrangements of the guide pins 12 illustrated in connection with the first embodiment of the vehicle disc brake assembly 10 illustrated in Figs. 1-6. As shown in Fig. 33, both of the guide pins 12 can be symmetrically arranged with the members 84 both oriented in the same "upward" direction in the bores 54 of the anchor bracket 32. In Fig. 34, both of the guide pins 12 can be symmetrically arranged with the members 84 both oriented in the same "downward" direction in the bores 54 of the anchor bracket 32. In Fig. 35, the guide pins 12 are non-symmetrically arranged with one of the members 84 (i.e., the left hand side guide pin in Fig. 35), oriented in an "upward" direction in the bore 54 of the anchor bracket 32, and the other one of the members 84 (i.e., the right hand side guide pin in Fig. 35), oriented in a "downward" direction in the bore 54 of the anchor bracket 32. In Fig. 36, the guide pins 12 are non-symmetrically arranged with one of the members 84 (i.e., the right hand side guide pin in Fig. 35), oriented in an "upward" direction in the bore 54 of the anchor bracket 32, and the other one of the members 84 (i.e., the left hand side guide pin in Fig. 35), oriented in a "downward" direction in the bore 54 of the anchor bracket 32. Alternatively, the arrangement of the guide pins in the associated bores of the anchor bracket may be other than illustrated and described, if so desired, in any suitable and/or desired symmetrical and/or non-symmetrical arrangement. For example, as shown in Fig. 36a, the guide pins 12 may be non-symmetrically arranged with one of the members 84 (i.e., the left hand side guide pin in Fig. 36a), oriented generally at approximately 45 degrees in a clockwise direction, and the other one of the members 84 (i.e., the right hand side guide pin in Fig. 36a), oriented at approximately 45 degrees in a counter-clockwise direction.

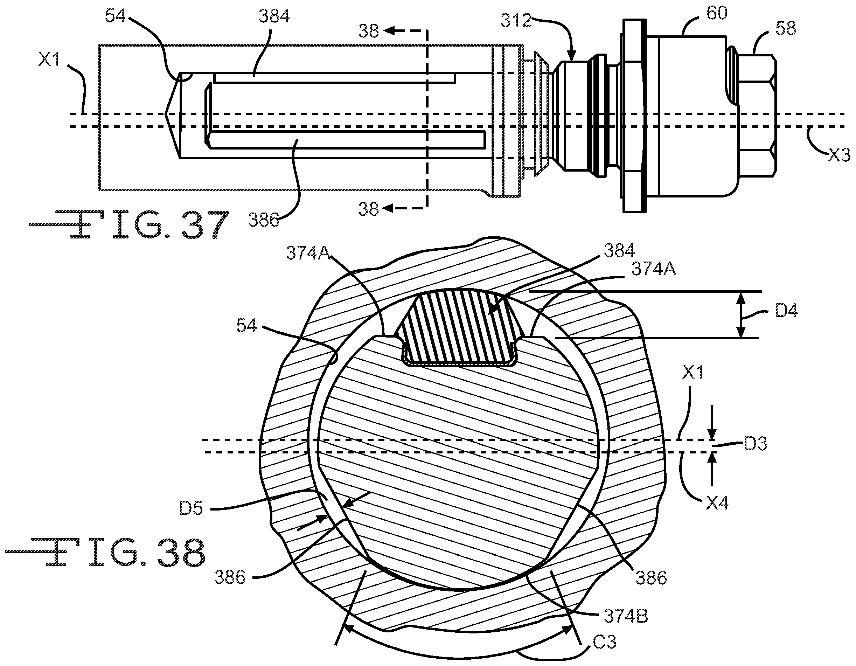

Turning now to Figs. 37-41 and using like reference numbers to indicate corresponding or similar parts, there is illustrated a fourteenth embodiment of a guide pin, illustrated generally at 312. In this embodiment, the guide pin 312 includes a first end, indicated generally at 370, which defines a head portion, a second end, indicated generally at 372, which defines a lead-in portion, and a center section, indicated generally at 374, which defines a shank portion.

In the illustrated embodiment, the head 370 preferably includes the internally threaded bore 62 (shown in Figs. 1 and 5), provided therein. The head 370 preferably further includes a flange 376 having a pair of opposed planar or flat surfaces 78 provided thereon and a pair of arcuate surfaces 380 disposed between the opposed flat surfaces 378. In the illustrated embodiment, one of the arcuate surfaces 380 preferably includes an indicia or other suitable identifying feature 380A provided therein or thereon for a purpose to be discussed below. In the illustrated embodiment, the indicia 380A is a V-shaped notch provided in one of the arcuate surfaces 380. Alternatively, the construction and/or configuration of the head 370 may be other than illustrated and described if so desired. For example, the head 370 would not have the internally threaded bore if stud type guide pins are used.

In the illustrated embodiment, the shank portion 374 of the guide pin 312 is annular, defines a first axis Y3 and a second axis X3, and preferably includes a slot or recess 382 provided therein along at least a portion thereof. Preferably, as illustrated, the slot 382 and the indicia 380A are in alignment with one another so that the orientation of the guide pin 312 in the bore 54 of the caliper 12 can be set to a desired predetermined orientation therewithin. The slot 382 is configured to receive a "spring-like" bushing or member 384 therein for a purpose to be discussed below.

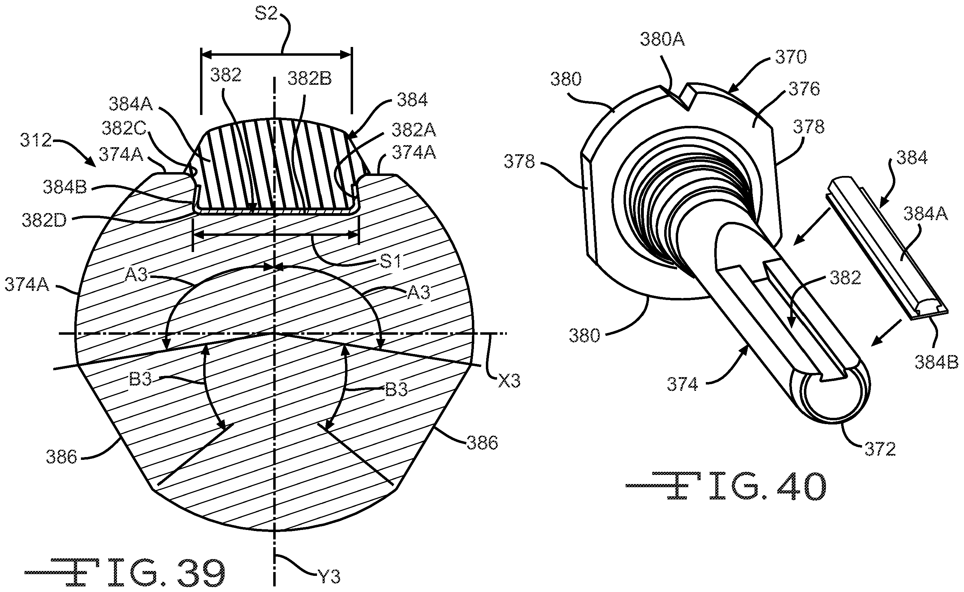

To assist in this, in the illustrated embodiment the slot 382 is preferably formed as a "closed" slot and defines a first or lower slot width or dimension S1 at a lower closed bottom end thereof and a second or upper slot width or dimension S2 at an upper open end thereof which is less than the first slot width S1 such that side walls 382A of the slot 382 are tapered slightly inwardly toward a bottom wall 382B thereof. Also, as best shown in Fig. 39, selected portions of the slot 382 may be generally rounded or curved, such as shown at 382C and 382D.

In the illustrated embodiment, the member 384 includes a first member 384A and a second member 384B. In the illustrated embodiment, the first member 384A is preferably formed from an elastomeric or rubber material and the second member 384B is preferably formed from a metal material. The first member 384A may be attached or secured to the second member 384B by suitable mechanical and/or chemical means, such as for example by molding, gluing and/or vulcanizing. In the illustrated embodiment the first member 384A may be preferably secured to the second member 384B by vulcanization.

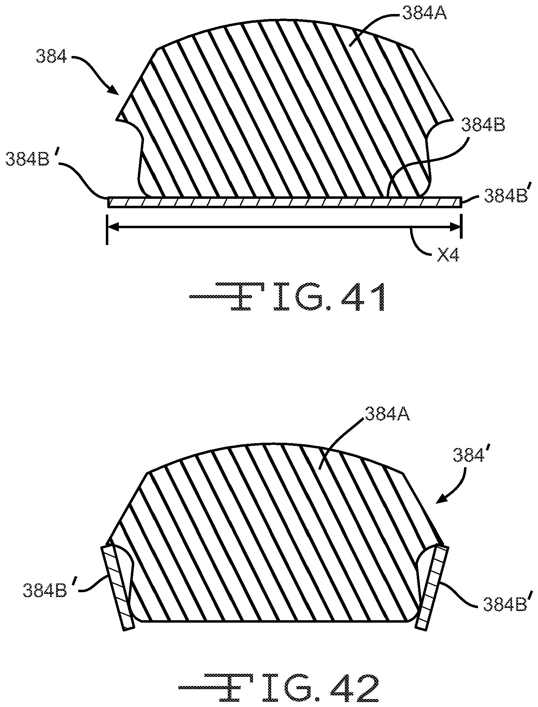

As shown in Fig. 41, in the uninstalled state, the second member 384B is formed as a generally flat plate or strip and defines a width or dimension X4. Preferably, the width X4 of the second member 384B is at least slightly greater than the second slot width S2 of the slot 382. As a result of this, when the member 384 is installed in the slot 382 of the guide pin 312, opposed portion or sides 384B' of the second member 384B will first engage the second slot S2 and deform the second member 384B inwardly against the adjacent surface of the first member 384A. Following this, the member 384 is then moved downwardly in the slot 382 to the installed position as shown in Fig. 39.

In this position, the second member 384B will generally conform to an outer shape or profile of the first member 384A. This results in the member 384 being installed and retained in the slot 382 of the guide pin 312, prior to installation of the guide pin 312 in the bore 54 of the anchor bracket 32, by at least a mechanical press-fit or friction fit of at least one of the contact between the metal surfaces of the slot 382 and the second member 384B and/or the contact between the rubber surface of the first member 384A and the metal surface of the slot 382. However, in both cases, the member 384 is retained in the slot 382 by the mechanical press-fit or friction fit between contacting surfaces of the components. As can be understood, the particular press-fit which is achieved will depend upon the particular geometries and/or construction of the slot 382 and/or the first member 384A and/or the second member 384B, and also will depend upon the amount of force or pressure which is exerted on the member 384, in particular the first member 384A, during the installation process of the member 384 in the slot 382.

Furthermore, when the guide pin 312 is then installed in the bore 54 of the anchor bracket 32, as shown in Fig. 38, the first member 384A may be further deformed and compressed causing the rubber material thereof to be expanded or moved outwardly. As a result of this further compression, the rubber material of the first member 384A will further and permanently fully deform (i.e., if not fully deformed during the installation of the member 384 in the slot 382 of the pin 312), the metal material of the second member 384B causing it to move or expand outwardly within the slot 382 so as to generally conform to an outer shape or profile of the slot 382, which preferably is of a closed configuration, thereby positively locking or capturing the member 384 in the slot 382.

Alternatively, this positive lock of the second member 384B in the slot 382 by permanently and fully deforming the second member 384B in the slot 382 may be accomplished during the initial assembly of the member 384 in the slot 382 of the guide pin 312. This can be done by applying a sufficient amount of force to the first member 384A during assembly so as to also cause the metal material of the second member 384B to expand outwardly within the slot 382 so as to permanently and fully deform and generally conform to the outer shape or profile of the slot 382 thereby positively locking the member 384 in the slot 382 prior to its installation in the bore 54. Also, as shown in Fig. 39, when the member 384 is secured to the guide pin 312 a portion of a first member 384A of the member 384 extends outwardly from the slot 382 beyond an outer surface 374A of the shank portion 374 of the guide pin 312 for a purpose to be discussed below.

In the illustrated embodiment, the guide pin 312 preferably further includes a pair of "lateral flat" surfaces or features 386 provided thereon. In the illustrated embodiment, the flat surfaces 386 are preferably formed so as to extend from near the second end 372 and toward the first end 370 so as to be provided in a substantial portion of the shank portion 374 of the guide pin 312. Preferably, as shown in the illustrated embodiment, the flat surfaces 386 are each spaced at a same angle A3 relative to the first axis Y3 of the guide pin 12 (which axis Y3 is also a center axis of the slot 382), and each flat surface 386 extends a predetermined angular distance B3.

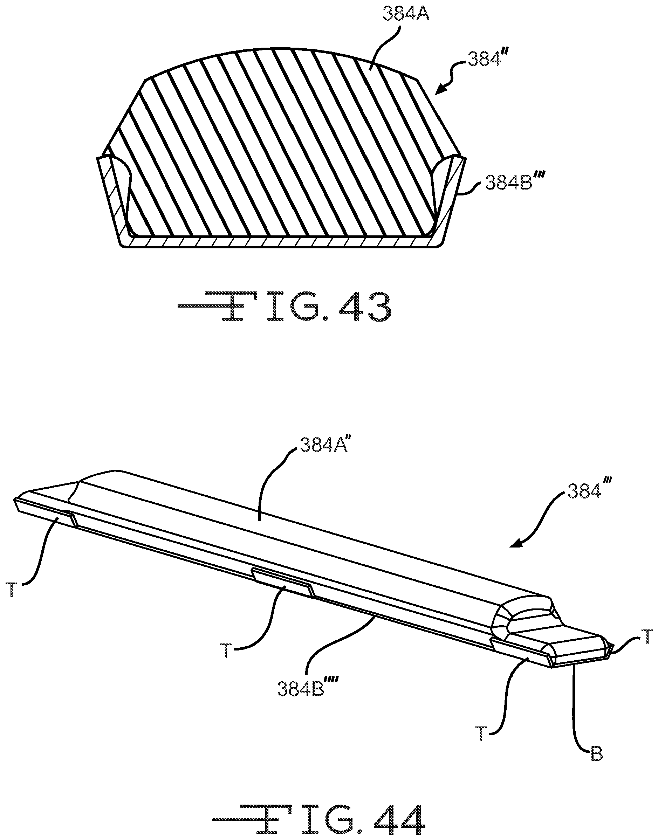

Alternatively, the construction of the guide pin 312 may be other than illustrated and described if so desired. For example, the configuration, number, location and/or orientation of one or more of the first end 370, the second end 372, the shank portion 374, the slot 382, the flat surfaces 386, and/or the angles A3 and/or B3 may be other than illustrated and described if so desired. For example, as illustrated in Fig. 42, a member 384' can include a pair of second members 384B" along the sides of the first member 384A as shown therein. Also, as illustrated in Fig. 43, a member 384" can include a generally U-shaped second member 384B'" along a bottom and sides of the first member 384A, as shown therein. Further, as illustrated in Fig. 44, a member 384'" can be provided having a first member 384A" and a second member 384"". In this embodiment, the second member 384"" is generally at least partially U-shaped and includes a plurality of spaced apart "angled" tabs T extending from a main or bottom wall or portion B thereof. In all of these alternate embodiments, the installation, function and operation of the associated members 384', 384" and 384'" would be generally similar to or the same as that of the member 384 described and illustrated herein.

As best shown in Fig. 38, when the disc brake assembly is fully assembled and the guide pin 312 is in the installed normal position, the member 384 is configured to engage only a portion of the bore 54 and to be compressed within the bore 54 so as to be operative to offset the axis X3 of the guide pin 12 relative to the axis X1 of the bore 54 a distance D3. In the illustrated embodiment, the distance D3 is preferably in the range from about 0.05 mm to about 0.15 mm.

At the same time, the member 384 is operative to bias - in a spring-like manner - only a portion 374B of an outer surface of the shank portion 374 of the guide pin 312 in "defined" contact with the bore 354. In the illustrated embodiment, the defined contact between the portion 374B and the bore 354 extends an angular distance C3. The angular distance C3 is preferably in the range from about 1-2 degrees to about 88-89 degrees. More preferably, the range is from about 15 degrees to about 60 degrees. Even more preferably the range is from about 30 degrees to about 45 degrees.

For example, the member 384 may be formed from other materials so long as the material is operative to provide a spring-like or similar biasing feature to that of the rubber material. Also, more than one member 384 can be provided and/or more than one defined points of contact can be provided between the associated surfaces of the guide pin and the bore. Thus, as can be readily understood, there are many different configurations possible having at least one or more of such members M and one or more of such defined points of contact C3. Also, as can be readily understood, the present invention can be used in connection with other attachment styles of guide pins if so desired.

Also, as can be seen in Fig. 38, the member 384 is operative to provide a first or "radial" guide pin clearance D4 between the bore 54 and the outer surface 374A of the shank portion 374 of the guide pin 312. The clearance D4 is preferably in the range from about 0.10 mm to about 0.30 mm. Further, a second or "tangential" guide clearance D5 is provided between the flat surfaces 386 of the shank portion 374 of the guide pin 312 and the bore 54.

Alternatively, the construction of the guide pin 312 and/or associated parts of the associated disc brake assembly may be other than illustrated and described if so desired. For example, the configuration, number, location and/or orientation of one or more of the first end 370, the second end 372, the shank portion 374, the recess 382, the flat surfaces 386, the angles A3, B3 and/or C3, and/or the distances D3, D4 and/or D5 may be other than illustrated and described, if so desired.

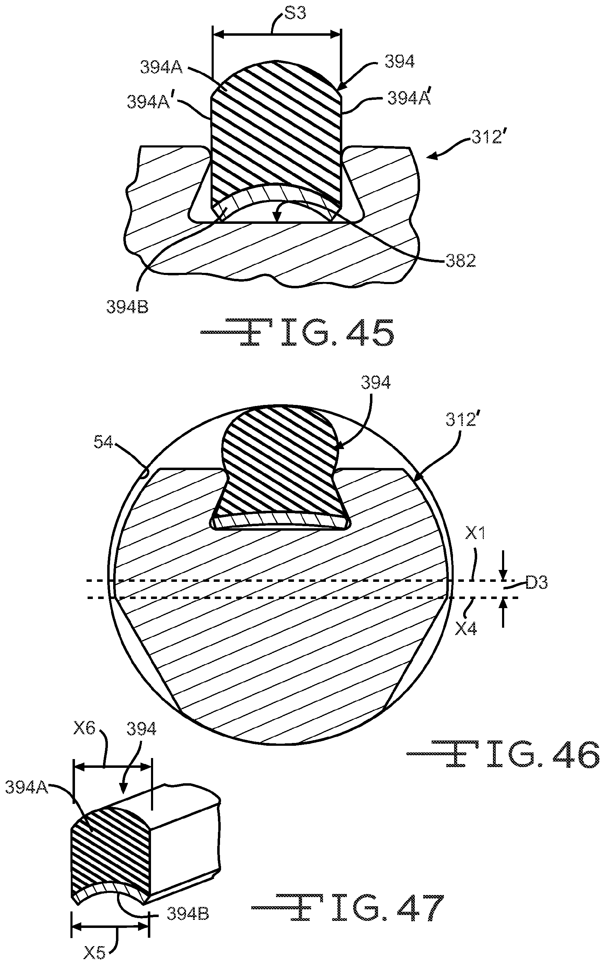

Turning now to Figs. 45-47 and using like reference numbers to indicate corresponding or similar parts, there is illustrated a second embodiment of a guide pin, illustrated generally at 312'. This embodiment is similar to that shown and described above in connection with the fourteenth embodiment of the guide pin 312 except that in this embodiment a member 394 is provided having a different configuration or construction compared to that of the member 384 of the fourteenth guide pin embodiment

As shown herein, the member 394 includes a first member 394A and a second member 394B. In the illustrated embodiment, the first member 394A is preferably formed from an elastomeric or rubber material and the second member 394B is preferably formed from a metal material. The first member 394A may be attached or secured to the second member 394B by suitable mechanical and/or chemical means, such as for example by molding, gluing and/or vulcanizing. In the illustrated embodiment the first member 394A may be preferably secured to the second member 394B by vulcanization.

As shown in Fig. 47, in this embodiment in the uninstalled state, the second member 394B is formed as a generally flat "bowed" outwardly or concave shaped plate or strip and defines a "normal" width or dimension X5. Preferably, the width X5 of the second member 394B is preferably slightly less than or generally equal to the second slot width S3 of the slot 382 for initial installation purposes. Also, preferably the side walls of the first member 394A define a width or dimension X5 which is preferably slightly greater than or generally equal to the second slot width S3 for initial retention purposes.

As a result of this, when the member 394 is initially installed in the slot 382 of the guide pin 312, as shown in Fig. 45, opposed sides 394A' of the first member 394A will engage the associated walls of the slot 382 at the second slot width S3 thereof. This results in the member 394 being installed and retained in the slot 382 of the guide pin 312', prior to installation of the guide pin 312' in the bore 54 of the anchor bracket 32, by a first or "light" mechanical press-fit or friction fit due to the contact between at least the rubber surface of the first member 394A with the metal surface of the slot 382.

Furthermore, when the guide pin 312' is then installed in the bore 54 of the anchor bracket 32, as shown in Fig. 46, the first member 394A is deformed and compressed causing the rubber material thereof to be expanded or moved outwardly. As a result of this compression, the rubber material of the first member 394A will cause the second member 394B to deflect or to be biased inwardly causing it to non-permanently flatten or spread out within the slot 382, which preferably is of a closed configuration as described above, thereby positively locking or capturing the member 394 in the slot 382 of the guide pin 312'. Once installed, the installation, function and operation of the guide pin 312' having the member 394 would be similar or the same as that of the guide pin 312 having the member 384 described and illustrated herein; however, in this embodiment, since the second member 394B does not permanently deform the second member 394B may provide an additional advantage of providing a "biasing" mechanism or means to compensate for any loss of the material of the first member 394A caused by wear thereof during sliding in the bore 54 compared to that of the prior embodiments wherein the associated second members 384B, 384B' and 384B" permanently deform during the assembly to the associated guide pin itself or during the assembly of the guide pin in the bore 54 of the anchor bracket 32.

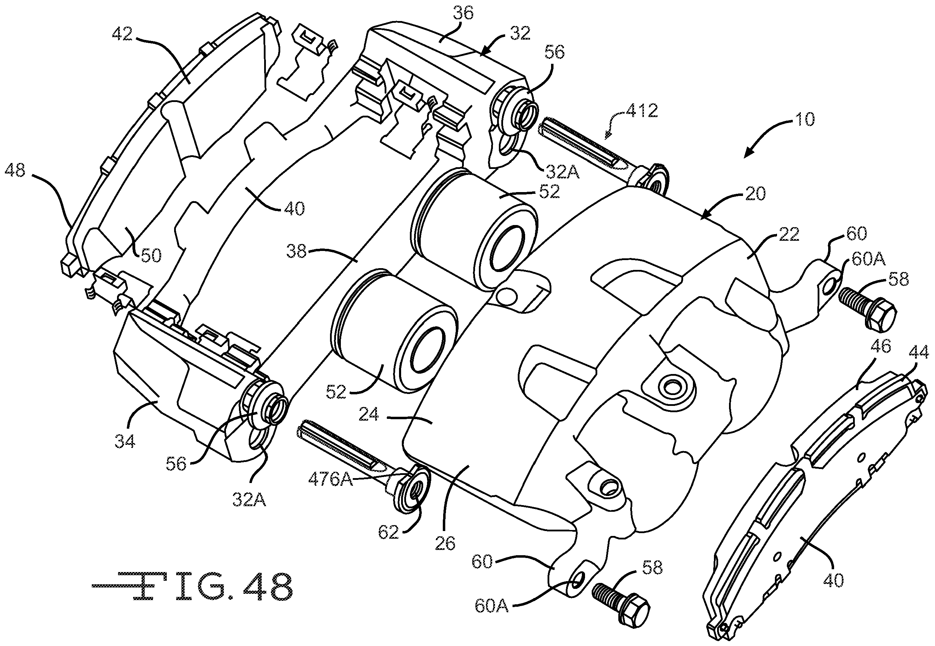

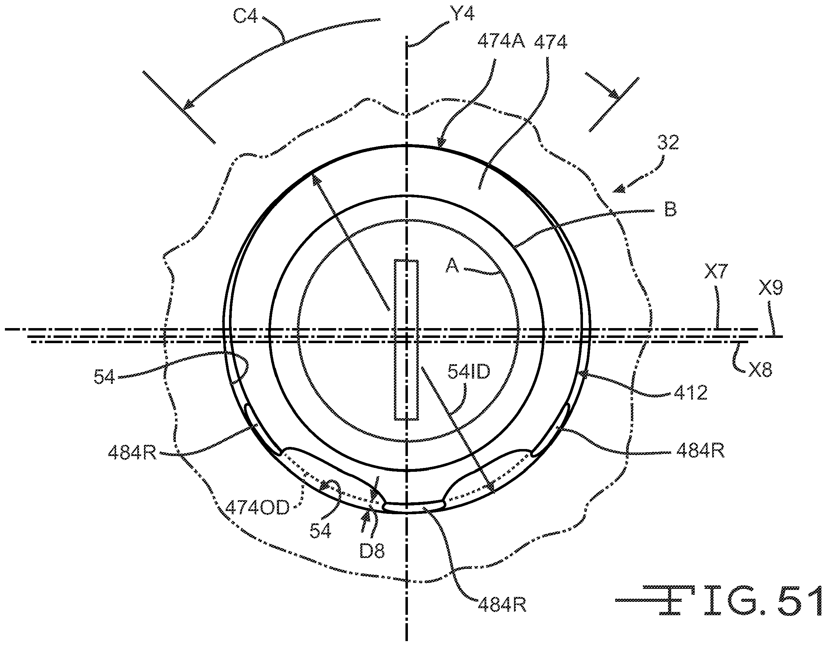

Turning now to Fig. 48 and using like reference numbers to indicate corresponding or similar parts, there is illustrated a nineteenth embodiment of a guide pin, illustrated generally at 412, illustrated in connection the vehicle disc brake assembly 10 of Fig. 1. In this embodiment, the guide pin 412 includes a first end, indicated generally at 470, which defines a head portion, a second end, indicated generally at 472, which defines a lead-in portion and is tapered so as to define a first outer annular surface B and a reduced second outer annular surface B, and a center section, indicated generally at 474, which defines a shank portion. In the illustrated embodiment, the shank portion 474 defines an outer diameter 474OD of the guide pin 412 which is less than an inner diameter 54ID (shown in Fig. 51), of the bore 54.

In the illustrated embodiment, the head 470 preferably includes the internally threaded bore 62 provided therein. The head 470 is illustrated as being a hexagon shaped head and preferably further includes a flange 476. The flange 476 preferably includes an indicia or other suitable identifying feature 476A provided therein or thereon so that the orientation of the guide pin 412 in the bore 54 of the caliper 12 can be set to a desired predetermined orientation therewithin. In the illustrated embodiment, the indicia 476A is a V-shaped notch provided in the flange 476. Alternatively, the construction and/or configuration of the head 470 may be other than illustrated and described if so desired. For example, the head 470 would not have the internally threaded bore if stud type guide pins are used.

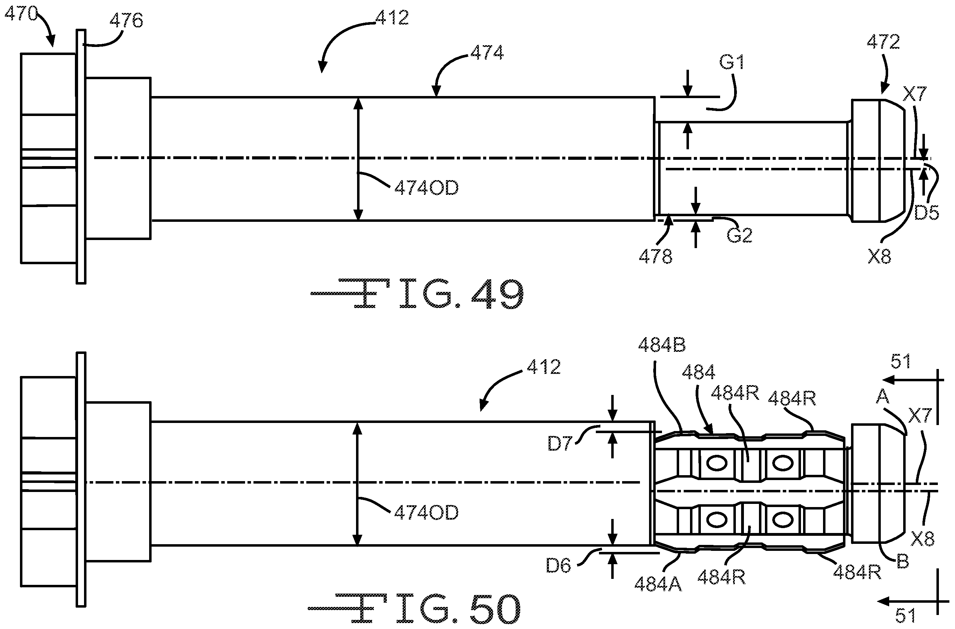

In the illustrated embodiment, the shank portion 474 of the guide pin 412 is annular, defines a first axis Y4 and a second axis X7 (both shown in Fig. 51), and preferably includes an annular groove, indicated generally at 478, provided in a portion thereof. The groove 478 defines an axis X8 which is offset or eccentric relative to the axis X7 a distance D5 so as to define a groove first "high side" depth G1, which is shown at the upper hand portion of Fig. 49 and would be at an associated 12 O'clock position, and an opposite groove second "low side" depth G2, which would be opposite the first depth G1 and is shown at the lower hand portion of Fig. 49 and would be at an associated 6 O'clock position. As can be seen, the first depth G1 is greater than the second depth G2. In the illustrated embodiment, the distance D5 is preferably in the range from about 0.05 mm to about 0.8 mm. More preferably, the distance D5 is in the range from about 0.1 mm to about 0.4 mm.

In the illustrated embodiment, the groove 478 is configured to receive a "spring-like" or resilient annular bushing or member 484 therein (as best shown in Fig. 50). Preferably, the member 884 is formed from rubber and is a "non-handed" or "symmetric" member in that the configuration thereof is of the same pattern or shape in both the radial and axial directions. As shown in this embodiment, the member 884 is provided with six axially extending raised protuberances or ribs 884R (only four of such ribs 84R being shown in Fig. 3 and three of such ribs 84R being shown in Fig. 51).

As shown in Fig. 50, due to the offset distance D5, when the member 484 is installed in the groove 478 of the guide pin 412, one or more first or "lower" portions 484A thereof will be disposed or extend radially outwardly past the outer diameter 474OD of the shank portion 474 of the guide pin 412 a distance D6, as shown on the bottom hand portion of Fig. 50. At the same time, in the illustrated embodiment one or more opposite second or "upper" portions 884B of the member 884 will be disposed or extend radially inwardly relative to the outer diameter 474OD of the shank portion 474 of the guide pin 412 a distance D7, as shown on the upper hand portion of Fig. 50.

Referring now to Fig. 51, there is illustrated a schematic view for discussion purposes generally taken in the direction of line 51-51 of Fig. 50, and also showing the guide pin 412, with the member 484 installed thereon, installed in the bore 54 of the anchor bracket 32 (shown in phantom), of the associated vehicle disc brake assembly 10. As shown therein, in the illustrated embodiment when the pin 412 having the member 484 installed thereon is disposed in the bore 54 of the anchor bracket 32, three ribs 484R of the first portion 484A of the member 484 will engage and be compressed against the inner diameter 54ID of the bore 54 causing the ribs 484 to be compressed from the uninstalled condition (e.g., shown in Fig. 50), to the compressed condition as shown in the lower hand portion of Fig. 51. As a result of this, the member 484 will bias or move the guide pin 412 - in a spring-like manner - in an upward direction in Fig. 51 causing a metal to metal "defined" contact between a portion, indicated generally at 474A, of the shank portion 474 and the inner diameter 54ID of the bore 54, as shown in the upper hand portion of Fig. 51.

In the illustrated embodiment, the defined contact between the portion 474A and the bore 54 extends an angular distance C4. The angular distance C4 is preferably in the range from about 1-2 degrees to about 88-89 degrees. More preferably, the range is from about 15 degrees to about 60 degrees. Even more preferably the range is from about 30 degrees to about 45 degrees.

Also, in the illustrated embodiment as shown in Fig. 51, due to the compression of the member 484 when it is installed in the bore 54, an axis X9 of the bore 54 is located between the axis X7 of the guide pin 412 and the axis X8 of the groove 478. In other words, the axis X9 of the bore 54 is offset or eccentric relative to the axis X7 of the guide pin 412.

Also, as can be seen in Fig. 51, the member 484 is operative to provide a first or "radial" guide pin clearance D3 between the inner diameter 54ID of the bore 54 and the outer diameter 474OD of the shank portion 474 of the guide pin 412. The clearance D8 is preferably in the range from about 0.10 mm to about 0.30 mm.

Alternatively, the construction of the guide pin 412 and/or associated parts of the disc brake assembly 10 may be other than illustrated and described if so desired. For example, the configuration, number, location and/or orientation of one or more of the first end 470, the second end 472, the shank portion 474, the groove 478, the member 484, the angle C4 and/or the distances D6 and/or D7 may be other than illustrated and described, if so desired.

For example, the member 484 may be formed from other materials so long as the material is operative to provide a spring-like or similar biasing feature to that of the rubber material. Also, more than one member 484 can be provided in one or more grooves 478 and/or more than one defined points of contact can be provided between the associated surfaces of the guide pin and the bore. Furthermore, the member 484 may different from that which is illustrated and described and may be of other types or kinds of construction and/or configuration, such as for example, a "simple" cylinder. Thus, as can be readily understood, there are many different configurations possible having at least one or more of such members and one or more of such defined points of contact. Also, as can be readily understood, the present invention can be used in connection with other attachment styles of guide pins if so desired.

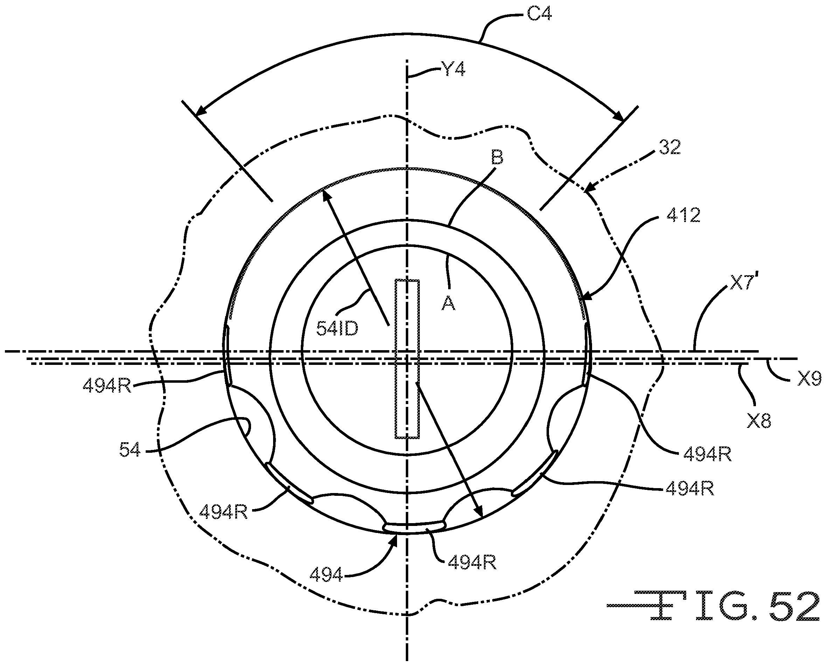

Turning now to Fig. 52 and using like reference numbers to indicate corresponding or similar parts, there is illustrated a twentieth embodiment of a guide pin, illustrated generally at 412'. The embodiment shown in Fig. 52 is a schematic view for discussion purposes and is similar to that shown and described above in connection with the nineteenth embodiment of the guide pin 412, except that in this embodiment a member, only partially shown and indicated generally at 494, is provided having a different configuration or construction compared to that of the member 484 of the nineteenth guide pin embodiment. Thus, like in the nineteenth embodiment, in this twentieth embodiment a similar groove (not shown) for receiving the member 494 is provided in a shank portion of the guide pin 412' and the groove has an axis X8 which is offset relative to an axis X7' of the guide pin 412'.

As shown in this embodiment, the member 494 is provided with eight axially extending raised protuberances or ribs 494A (only five of such ribs 494A being shown in Fig. 52). As can be seen in this embodiment, due to the compression of some of the ribs 494A of the member 494 when it is installed in the bore 54 (in the illustrated embodiment five ribs 494A are at least partially compressed), an axis X9 of the bore 54 is located between an axis X7' of the guide pin 412' and the axis X8 of the groove 478. In other words, the axis X9 of the bore 54 is offset relative to the axis X7' of the guide pin 412'. Thus, it is understood that once the guide pin 412' of the twentieth embodiment is installed in the bore 54, the function and operation of the guide pin 412' having the member 494 would be similar or the same as that of the guide pin 412 having the member 484 described and illustrated above in connection with the nineteenth embodiment.

In accordance with the provisions of the patent statues, the principle and mode of operation of this invention have been described and illustrated in its preferred embodiments. However, it must be understood that the invention may be practiced otherwise than as specifically explained and illustrated without departing from the scope of the attached claims.

## Claims

1. A disc brake assembly (10) comprising:
an anchor bracket (32) having at least one bore (54) formed therein, the bore (54) defining a first axis (X1);
a brake caliper (20) slidably secured to the anchor bracket (32);
a pair of brake pads carried by the disc brake assembly (10); and
at least one guide pin (12) adapted to be disposed in the bore (54) of the anchor bracket (32), the at least one guide pin (12) defining a second axis (X);
**characterised in that** when the at least one guide pin (12) is disposed in the at least one bore (54) of the anchor bracket (32), the second axis (X) of the at least one guide pin (12) is configured to be offset relative to the first axis (XI) of the at least one bore (54) such that there is provided at least one defined point of contact between only a portion of a shank portion (74) of the at least one guide pin (12) and a portion of an inner surface of the at least one bore (54).

2. The disc brake assembly (10) of Claim 1 wherein at least one spring-like member (84), which is formed separate from the at least one guide pin (12), is provided, and wherein the at least one spring-like member (84) is operative to bias in a spring-like manner the at least one guide pin (12) in the at least one bore (54) thereby offsetting the second axis (X) of the at least one guide pin (12) relative to the first axis (X1) of the at least one bore (54), and/or
wherein the at least one guide pin (12) includes at least one lateral flat surface provided thereon on at least the shank portion (74) thereof, or
wherein a pair of spring-like members (84), which are formed separate from the guide pins (12), are provided, and wherein when the guide pins (12) are disposed in the bores (54)of the anchor bracket (32), the second axis (X) of the guide pins (12) is configured to be offset relative to the first axis (X1) of the bores (54) by the spring-like members (84) such that there is provided at least one defined point of contact between only a portion of a shank portion (74) of each of the guide pins (12) and a portion of an inner surface of each of the bores (54), or
wherein the at least one guide pin (12) includes at least one slot (82), the at least one slot (82) having a member (84), which is formed separate from the guide pin (12), disposed therein and which is operative to bias the guide pin (12) in the at least one bore (54) thereby offsetting the second axis (X) of the guide pin (12) relative to the first axis (X1) of the at least one bore (54), wherein the member (84) includes a first member (84) formed from an elastomeric material and a second member (84) formed from a metal material which is configured to retain the member (84) in the slot (82).

3. The disc brake assembly (10) of Claim 2 wherein the at least one springlike member (84) is secured to one of the at least one guide pins (12) and the at least one bore (54), and/or
wherein the at least one springlike member (84) is formed from an elastomer material, and/or
wherein the at least one springlike member (84) is a sheath-like member, and/or
wherein the at least one springlike member (84) is disposed in a slot (82) provided in the at least one guide pin (12), and/or
wherein the at least one bore (54) is a two-part bore including a first bore, which is configured to receive the at least one guide pin (12), and a second bore, which is configured to receive only at least a part of the at least one spring-like member (84).

4. The disc brake assembly (10) of Claim 3 wherein the at least one springlike member (84) is a rubber bushing.

5. The disc brake assembly (10) of Claim 2 wherein the at least one second member (384B) is configured to deform to thereby retain the member in the slot (382), or
wherein the member is retained in the slot by a press-fit, and/or
wherein the slot is of a closed configuration and defines a first upper slot width at an upper open end thereof which is less than a second lower slot width at a lower closed bottom end thereof, and/or
wherein the second member is at least one metal strip, and/or
wherein the metal strip is a generally flat metal strip, or
wherein the metal strip is a generally U-shaped metal strip, or
wherein the metal strip is a generally bow-shaped metal strip, or
wherein the second member is a pair of metal strips disposed on opposed sides of the first member.

6. The disc brake assembly (10) of Claim 1 wherein the guide pin (412) includes at least one groove (478) formed therein, the groove (478) defining a third axis (X8) which is offset relative to the second axis (X7) of the guide pin (412), the at least one groove having a member (484) disposed therein which is operative to bias the guide pin (412) in the at least one bore whereby the second axis (X7) of the guide pin (412) is offset relative to the first axis (X9) of the at least one bore (54) such that there is provided at least one defined point of contact between only a portion of the guide pin (412) and a portion of an inner surface of the at least one bore (54).

7. The disc brake assembly (10) of Claim 6 wherein the member (484) is a resilient member, or
wherein the member (484) is an annular rubber bushing, or
wherein the guide pin (412) includes a first end, a shank portion (474) and an opposite second end (472), wherein the groove (478) is formed at least in the shank portion (474), and/or
wherein the first axis (X9) of the bore is located between the second axis (X7) of the guide pin (412) and the third axis (X8) of the groove, or
wherein the member (484) is a resilient member and includes a plurality of raised ribs (484R), wherein only at least one of the plurality of raised ribs (484R) engage a portion of an inner diameter (54ID) surface of the at least one bore (54) and are compressed.

8. The disc brake assembly (10) of Claim 7 wherein the at least bore (54) defines an inner diameter (54ID) and the shank portion (474) of the guide pin (412) defines an outer diameter (474OD) which is less than the inner diameter (474ID) of the at least one bore (54), or
wherein the at least one point of contact extends less than 180 degrees.

9. A method for producing a disc brake assembly (10) comprising the steps of:
(a) providing an anchor bracket (32) having at least one bore (54) formed therein, the bore defining a first axis (X1);
(b) providing a guide pin (12) having at least one slot (82) formed therein, the guide pin (12) defining a second axis (X);
(c) disposing a member (84), which is formed separate from the guide pin (12), in the slot (82), the member (84) including a first member formed from an elastomeric material and a second member formed from a metal material;
(d) following step (c), disposing the guide pin (12) in the at least one bore (54) of the anchor bracket (32) wherein the member is operative to bias the guide pin (12) in the at least one bore (54) to thereby offset the second axis (X) of the guide pin (12) relative to the first axis (X1) of the at least one bore (54) such that there is provided at least one defined point of contact between only a portion of the guide pin (12) and a portion of an inner surface of the at least one bore (54), and wherein during at least one of the step (c) and the step (d) the second member is configured to deform to thereby retain the member in the slot (82).

10. The method of Claim 9 wherein during at least one of the step (c) and the step (d) the member (84) is retained in the slot (82) by a press-fit, or
wherein the slot (82) is of a closed configuration and defines a first upper slot width at an upper open end thereof which is less than a second lower slot width at a lower closed bottom end thereof, wherein the metal strip is a generally flat metal strip prior to assembly and during at least one of the step (c) and the step (d) the metal strip is permanently deformed to a generally U-shaped strip to retain the member in the slot (82), or
wherein the slot (82) is of a closed configuration and defines a first upper slot width at an upper open end thereof which is less than a second lower slot width at a lower closed bottom end thereof, wherein the metal strip is a generally U-shaped metal strip prior to assembly and during the at least one of the step (c) and the step (d) the metal strip is permanently deformed to also a generally U-shaped metal strip to retain the member in the slot (82), or
wherein the slot (82) is of a closed configuration and defines a first upper slot width at an upper open end thereof which is less than a second lower slot width at a lower closed bottom end thereof, wherein the metal strip is a generally bow-shaped metal strip prior to assembly and during the step (d) the metal strip is non-permanently deformed to retain the member in the slot (82).

11. A guide pin (412) adapted for use in a disc brake assembly (10) as defined in any claims 1 to 8 comprising: a guide pin (412) having a groove (478) formed therein, the groove (478) defining a first axis which is eccentric relative to a second axis of the guide pin (412), the groove (478) having a member (484) disposed therein which is configured to bias the guide pin (412) in a bore of an anchor bracket (32) of the disc brake assembly (10) whereby the second axis of the guide pin (412) is eccentric relative to the first axis of the at least one bore (54) such that there is provided at least one defined point of contact between only a portion of the guide pin (412) and a portion of an inner surface of the at least one bore (54).

12. The guide pin (412) of Claim 11 wherein the member (484) is an annular rubber bushing, the guide pin (412) includes a first end, a shank portion (474) and an opposite second end (472), and the groove (478) is formed at least in the shank portion (474).

## Patentansprüche

1. Scheibenbremsenanordnung (10), umfassend:
eine Ankerhalterung (32), die wenigstens eine darin gebildete Bohrung (54) aufweist, wobei die Bohrung (54) eine erste Achse (X1) definiert;
einen Bremssattel (20), der verschiebbar zu der Ankerhalterung (32) gesichert;
ein Paar an Bremsbelegen, das durch die Scheibenbremsanordnung (10) getragen wird; und
wenigstens ein Führungsstift (12), der dazu eingerichtet ist, in der Bohrung (54) der Ankerhalterung (32) angeordnet zu sein, wobei der wenigstens eine Führungsstift (12) eine zweite Achse (X) definiert;
**dadurch gekennzeichnet, dass**, wenn der wenigstens eine Führungsstift (12) in der wenigstens einen Bohrung (54) der Ankerhalterung (32) angeordnet ist, die zweite Achse (X) des wenigstens einen Führungsstifts (12) dazu ausgebildet ist, relativ zu der ersten Achse (X1) der wenigstens einen Bohrung (54) versetzt zu sein, sodass dort wenigstens ein definierter Kontaktpunkt zwischen nur einem Abschnitt eines Schenkelabschnitts (74) des wenigstens einen Führungsstifts (12) und einem Abschnitt einer Innenfläche der wenigstens einen Bohrung (54) bereitgestellt ist.

2. Scheibenbremsenanordnung (10) nach Anspruch 1, wobei wenigstens ein Feder-ähnliches Element (84), das separat von dem wenigstens einen Führungsstift (12) gebildet ist, bereitgestellt ist, und wobei das wenigstens eine Feder-ähnliche Element (84) so wirkt, dass in einer Feder-ähnlichen Weise der wenigstens eine Führungsstift (12) in die wenigstens eine Bohrung (54) vorgespannt ist und dadurch die zweite Achse (X) des wenigstens einen Führungsstifts (12) relativ zu der ersten Achse (X1) der wenigstens einen Bohrung (54) versetzt ist, und/oder
wobei der wenigstens eine Führungsstift (12) wenigstens eine auf diesem bereitgestellte laterale flache Oberfläche auf dem wenigstens einen Schenkelabschnitt (74) beinhaltet, oder
wobei ein Paar an Feder-ähnlichen Einheiten (84), das separat von den Führungsstiften (12) gebildet ist, bereitgestellt ist, und wobei, wenn die Führungsstifte (12) in den Bohrungen (54) der Ankerhalterung (32) angeordnet sind, die zweite Achse (X) der Führungsstifte (12) dazu eingerichtet ist, relativ zu der ersten Achse (X1) der Bohrungen (54) durch die Feder-ähnlichen Einheiten (84) versetzt zu sein, sodass dort wenigstens ein definierter Kontaktpunkt zwischen nur einem Abschnitt eines Schenkelabschnitts (74) jedes Führungsstifts (12) und einem Abschnitt einer Innenfläche jeder Bohrung (54) bereitgestellt ist, oder
wobei der wenigstens eine Führungsstift (12) wenigstens einen Spalt (82) beinhaltet,
wobei der wenigstens eine Spalt (82) eine darin angeordnete Einheit (84) aufweist, die separat von dem Führungsstift (12) gebildet ist, und der so wirkt, dass der Führungsstift (12) relativ zu der ersten Achse (X1) der wenigstens einen Bohrung (54) vorgespannt ist, wobei die Einheit (84) eine erste Einheit (84), die aus einem elastisch verformbaren Material gebildet ist, und eine zweite Einheit (84) beinhaltet, die aus einem metallischen Material gebildet ist, welche dazu ausgebildet ist, die Einheit (84) in dem Spalt (82) festzuhalten.

3. Scheibenbremsenanordnung (10) nach Anspruch 2, wobei die wenigstens eine Feder-ähnliche Einheit (84) zu einem des wenigstens einen Führungsstifts (12) und der wenigstens einen Bohrung (54) gesichert ist, und/oder
wobei die wenigstens eine Feder-ähnliche Einheit (84) aus einem elastisch verformbaren Material gebildet ist, und/oder
wobei die wenigstens eine Feder-ähnliche Einheit (84) eine Ummantelungs-ähnliche Einheit ist, und/oder
wobei die wenigstens eine Feder-ähnliche Einheit (84) in einem Spalt (82) angeordnet ist, der in dem wenigstens einen Führungsstift (12) bereitgestellt ist, und/oder
wobei die wenigstens eine Bohrung (54) eine zweiteilige Bohrung ist, die eine erste Bohrung, welche zum Empfangen des wenigstens einen Führungsstifts (12) ausgebildet ist, und eine zweite Bohrung beinhaltet, welche zum Empfangen nur wenigstens eines Teils der wenigstens einen Feder-ähnlichen Einheit (84) ausgebildet ist.

4. Scheibenbremsenanordnung (10) nach Anspruch 3, wobei die wenigstens eine Feder-ähnliche Einheit (84) eine Gummitülle ist.

5. Scheibenbremsenanordnung (10) nach Anspruch 2, wobei die wenigstens eine zweite Einheit (384B) dazu ausgebildet ist, sich zu verformen, um die Einheit in dem Spalt (382) zu halten, oder
wobei die Einheit in dem Spalt durch Presspassung gehalten wird, und/oder
wobei der Spalt eine geschlossene Konfiguration hat und eine erste obere Spaltbreite bei einem oberen offenen Ende davon definiert, welche kleiner als eine zweite untere Spaltbreite bei einem unteren geschlossenen unteren Ende ist, und/oder
wobei die zweite Einheit wenigstens ein Metallstreifen ist, und/oder
wobei der Metallstreifen ein im Wesentlichen flacher Metallstreifen ist, oder
wobei der Metallstreifen ein im Wesentlichen U-förmiger Metallstreifen ist, oder
wobei der Metallstreifen ein im Wesentlichen Bogen-förmiger Metallstreifen ist, oder
wobei die zweite Einheit ein Paar an Metallstreifen ist, die auf entgegengesetzten Flächen der ersten Einheit angeordnet sind.

6. Scheibenbremsenanordnung (10) nach Anspruch 1, wobei der Führungsstift (12) wenigstens eine darin gebildete Nut (478) beinhaltet, wobei die Nut (478) eine dritte Achse (X8) definiert, die relativ zu der zweiten Achse (X7) des Führungsstifts (412) versetzt ist, wobei die wenigstens eine Nut eine darin angeordnete Einheit (484) aufweist, die so wirkt, dass der Führungsstift (412) in der wenigstens einen Bohrung vorgespannt ist, wobei die zweite Achse (X7) des Führungsstifts (412) relativ zu der ersten Achse (X9) der wenigstens einen Bohrung (54) versetzt ist, sodass dort wenigstens ein definierter Kontaktpunkt zwischen einem Abschnitt des Führungsstifts (412) und einem Abschnitt einer Innenfläche der wenigstens einen Bohrung (54) bereitgestellt ist.

7. Scheibenbremsenanordnung (10) nach Anspruch 6, wobei die Einheit (484) ein nachgiebiges Element ist, oder
wobei die Einheit (484) eine ringförmige Gummitülle ist, oder
wobei der Führungsstift (412) ein erstes Ende, einen Schenkelabschnitt (474) und ein entgegengesetztes zweites Ende (472) beinhaltet, wobei die Nut (478) wenigstens in dem Schenkelabschnitt (474) gebildet ist, und/oder
wobei die erste Achse (X9) der Bohrung zwischen der zweiten Achse (X7) des Führungsstifts (412) und der dritte Achse (X8) der Nut positioniert ist, oder
wobei die Einheit (484) ein nachgiebiges Element ist und eine Vielzahl von angehobenen Rippen (484R) beinhaltet, wobei nur wenigstens eine der Vielzahl von angehobenen Rippen (484R) einen Abschnitt einer Innendurchmesser- (514D) Oberfläche der wenigstens einen Bohrung (54) einrastet und zusammendrückt.

8. Scheibenbremsenanordnung (10) nach Anspruch 7, wobei die wenigstens eine Bohrung (54) einen Innendurchmesser (514D) definiert und der Schenkelabschnitt (474) des Führungsstifts (412) einen Außendurchmesser (474OD) definiert, der kleiner als der Innendurchmesser (474ID) der wenigstens einen Bohrung ist, oder wobei der wenigstens eine Kontaktpunkt sich weniger als 180 Grad erstreckt.

9. Verfahren zum Herstellen einer Scheibenbremsanordnung (10), umfassend die Schritte:
(a) Bereitstellen einer Ankerhalterung (32), die wenigstens eine darin gebildete Bohrung (84) aufweist, wobei die Bohrung eine erste Achse (X1) definiert;
(b) Bereitstellen eines Führungsstifts (12), der wenigstens einen darin gebildeten Spalt (54) aufweist, wobei der Führungsstift (12) eine zweite Achse (X) definiert;
(c) Anordnen einer Einheit (84), die separat von dem Führungsstift (12) gebildet ist, in dem Spalt (82), wobei die Einheit (84) eine erste Einheit, die aus einem elastisch verformbaren Material gebildet ist, und eine zweite Einheit beinhaltet, die aus einem metallischen Material gebildet ist;
(d) nach Schritt (c), Anordnung des Führungsstifts (12) in der wenigstens einen Bohrung (54) der Ankerhalterung (32), wobei die Einheit so wirkt, dass der Führungsstift (12) in der wenigstens einen Bohrung (54) vorgespannt wird, um somit die zweite Achse (X) des Führungsstifts (12) relativ zu der ersten Achse (X1) der wenigstens einen Bohrung (54) zu versetzen, sodass dort wenigstens ein definierter Kontaktpunkt zwischen einem Abschnitt des Führungsstifts (12) und einem Abschnitt einer Innenfläche der wenigstens einen Bohrung (54) bereitgestellt wird, und wobei, während wenigstens einem des Schritts (c) und des Schritts (d), die zweite Einheit zum Verformen ausgebildet ist, um die Einheit in dem Spalt (82) zu halten.

10. Verfahren nach Anspruch 9, wobei, während einem des Schritts (c) und des Schritts (d), die Einheit (84) in dem spalt (82) durch Presspassung gehalten wird, oder
wobei der Spalt (82) eine geschlossene Konfiguration hat und eine erste obere Spaltbreite bei einem oberen offenen Ende davon definiert, die kleiner als eine zweite untere Spaltbreite bei einem unteren geschlossenen unteren Ende davon ist, wobei der Metallstreifen ein im Wesentlichen flacher Metallstreifen vor der Fertigung ist, und während wenigstens einem des Schritts (c) und des Schritts (d) der Metallstreifen dauerhaft zu einem U-förmigen Streifen verformt ist, um die Einheit in dem Spalt (82) zu halten, oder
wobei der Spalt (82) eine geschlossene Konfiguration hat und eine erste obere Spaltbreite bei einem oberen offenen Ende davon definiert, die kleiner als eine zweite untere Spaltbreite bei einem unteren geschlossenen unteren Ende davon ist, wobei der Metallstreifen ein im Wesentlichen U-förmiger Metallstreifen vor der Fertigung ist, und während wenigstens einem des Schritts (c) und des Schritts (d) der Metalltreifen dauerhaft auch zu einem im Wesentlichen U-förmigen Metallstreifen verformt ist, um die Einheit in dem Spalt (82) zu halten, oder
wobei der Spalt (82) eine geschlossene Konfiguration hat und eine erste obere Spaltbreite bei einem oberen offenen Ende davon definiert, die kleiner als eine zweite untere Spaltbreite bei einem unteren geschlossenen unteren Ende davon ist, wobei der Metallstreifen ein im Wesentlichen Bogen-förmiger Metallstreifen vor der Fertigung ist, und während dem Schritt (d) der Metallstreifen nicht dauerhaft deformiert ist, um die Einheit in dem Spalt (82) zu halten.

11. Führungsstift (12), eingerichtet zum Verwenden in einer Scheibenbremsenanordnung (10) wie in einem der Ansprüche 1 bis 8 definiert, umfassend: einen Führungsstift (412), der eine darin gebildete Nut (478) aufweist,
wobei die Nut (478) eine erste Achse definiert, die exzentrisch relativ zu einer zweiten Achse des Führungsstifts (412) ist, wobei die Nut (478) eine darin angeordnete Einheit (484) aufweist, die dazu eingerichtet ist, den Führungsstift (412) in einer Bohrung einer Ankerhalterung (32) des Scheibenbremsenanordnung (10) zu halten, wodurch die zweite Achse des Führungsstifts (412) exzentrisch relativ zu der ersten Achse der wenigstens einen Bohrung (54) ist, sodass dort wenigstens ein definierter Kontaktpunkt zwischen nur einem Abschnitt des Führungsstifts (412) und einem Abschnitt einer Innenfläche der wenigstens einen Bohrung (54) bereitgestellt ist.

12. Führungsstift (412) nach Anspruch 11, wobei die Einheit (84) eine ringförmige Gummitülle ist, wobei der Führungsstift (412) ein erstes Ende, einen Schenkelabschnitt (474) und ein entgegengesetztes zweites Ende (472) beinhaltet, und die Nut (478) wenigstens teilweise in dem Schenkelabschnitt (474) gebildet ist.

## Revendications

1. Ensemble (10) de frein à disque comprenant :
un support d'ancrage (32) ayant au moins un alésage (54) formé dans celui-ci, l'alésage (54) définissant un premier axe (X1) ;
un étrier (20) de frein fixé coulissant au support d'ancrage (32) ;
une paire de plaquettes de frein supportées par l'ensemble (10) de frein à disque ; et
au moins une tige de guidage (12) adaptée à être disposée dans l'alésage (54) du support d'ancrage (32), l'au moins une tige de guidage (12) définissant un deuxième axe (X) ;
**caractérisé en ce que**
lorsque l'au moins une tige de guidage (12) est disposée dans l'au moins un alésage (54) du support d'ancrage (32), le deuxième axe (X) de l'au moins une tige de guidage (12) est configuré pour être décalé par rapport au premier axe (X1) de l'au moins un alésage (54) de telle manière qu'il est prévu au moins un point de contact défini entre uniquement une partie d'une partie de queue (74) de l'au moins une tige de guidage (12) et une partie d'une surface intérieure de l'au moins un alésage (54).

2. Ensemble (10) de frein à disque selon la revendication 1, dans lequel au moins un élément (84) de type ressort, qui est formé séparé de l'au moins une tige de guidage (12), est prévu, et dans lequel l'au moins un élément (84) de type ressort est utilisable pour pousser d'une manière de type ressort l'au moins une tige de guidage (12) dans l'au moins un alésage (54) décalant ainsi le deuxième axe (X) de l'au moins une tige de guidage (12) par rapport au premier axe (X1) de l'au moins un alésage (54), et/ou
dans lequel l'au moins une tige de guidage (12) inclut au moins une surface latérale plate prévue sur celle-ci sur au moins la partie de queue (74) de celle-ci, ou
dans lequel une paire d'éléments (84) de type ressort, qui sont formés séparés des tiges de guidage (12), sont prévus, et dans lequel les tiges de guidage (12) sont disposées dans les alésages (54) du support d'ancrage (32), le deuxième axe (X) des tiges de guidage (12) est configuré pour être décalé par rapport au premier axe (X1) des alésages (54) par les éléments (84) de type ressort de telle sorte qu'il est prévu au moins un point de contact défini entre uniquement une partie d'une partie de queue (74) de chacune des tiges de guidage (12) et une partie d'une surface intérieure de chacun des alésages (54), ou
dans lequel l'au moins une tige de guidage (12) inclut au moins une fente (82), l'au moins une fente (82) ayant un élément (84), qui est formé séparé de la tige de guidage (12), disposé dans celle-ci et qui est utilisable pour pousser la tige de guidage (12) dans l'au moins un alésage (54) décalant ainsi le deuxième axe (X) de la tige de guidage (12) par rapport au premier axe (X1) de l'au moins un alésage (54), dans lequel l'élément (84) inclut un premier élément (84) formé à partie d'un matériau élastomérique et un deuxième élément (84) formé à partie d'un matériau métallique qui est configuré pour retenir l'élément (84) dans la fente (82).

3. Ensemble (10) de frein à disque selon la revendication 2, dans lequel l'au moins un élément (84) de type ressort est fixé un(e) de l'au moins une tige de guidage (12) et de l'au moins un alésage (54), et/ou
dans lequel l'au moins un élément (84) de type ressort est formé à partir d'un matériau élastomère, et/ou
dans lequel l'au moins un élément (84) de type ressort est un élément de type gaine, et/ou
dans lequel l'au moins un élément (84) de type ressort est disposé dans une fente (82) prévue dans l'au moins une tige de guidage (12), et/ou
dans lequel l'au moins un alésage (54) est un alésage en deux parties incluant un premier alésage, qui est configuré pour recevoir l'au moins une tige de guidage (12), et un deuxième alésage, qui est configuré pour recevoir uniquement au moins une partie de l'au moins un élément (84) de type ressort.

4. Ensemble (10) de frein à disque selon la revendication 3, dans lequel l'au moins un élément (84) de type ressort est une bague en caoutchouc.

5. Ensemble (10) de frein à disque selon la revendication 2, dans lequel l'au moins un deuxième élément (384B) est configuré pour se déformer pour ainsi retenir l'élément dans la fente (382), ou
dans lequel l'élément est retenu dans la fente par un ajustement par pression, et/ou
dans lequel la fente est d'une configuration fermée et définit une première largeur supérieure de fente à une extrémité supérieure ouverte de celle-ci qui est inférieure à une deuxième largeur inférieure de fente à une extrémité inférieure de fond fermé de celle-ci, et/ou
dans lequel le deuxième élément est au moins une bande métallique, et/ou
dans lequel la bande métallique est une bande métallique de façon générale plate, ou
dans lequel la bande métallique est une bande métallique de façon générale en forme de U, ou
dans lequel la bande métallique est une bande métallique de façon générale en forme en arc, ou
dans lequel le deuxième élément est une paire de bandes métalliques disposées sur des côtés opposés du premier élément.

6. Ensemble (10) de frein à disque selon la revendication 1, dans lequel la tige de guidage (412) inclut au moins une rainure (478) formée dans celle-ci, la rainure (478) définissant un troisième axe (X8) qui est décalé par rapport au deuxième axe (X7) de la tige de guidage (412), l'au moins une rainure ayant un élément (484) disposé dans celui-ci qui est utilisable pour pousser la tige de guidage (412) dans l'au moins un alésage d'où il résulte que le deuxième axe (X7) de la tige de guidage (412) est décalé par rapport au premier axe (X9) de l'au moins un alésage (54) de telle sorte qu'il est prévu au moins un point de contact défini entre uniquement une partie de la tige de guidage (412) et une partie d'une surface intérieure de l'au moins un alésage (54).

7. Ensemble (10) de frein à disque selon la revendication 6, dans lequel l'élément (484) est un élément résilient, ou
dans lequel l'élément (484) est une bague annulaire en caoutchouc, ou
dans lequel la tige de guidage (412) inclut une première extrémité, une partie de queue (474) et une deuxième extrémité (472) opposée, dans lequel la rainure (478) est formée au moins dans la partie de queue (474), et/ou
dans lequel le premier axe (X9) de l'alésage est situé entre le deuxième axe (X7) de la tige de guidage (412) et le troisième axe (X8) de la rainure, ou
dans lequel l'élément (484) est un élément résilient et inclut une pluralité de nervures surélevées (484R), dans lequel uniquement au moins une de la pluralité de nervures surélevées (484R) engage une partie d'une surface de diamètre intérieur (541D) de l'au moins un alésage (54) et sont compressées.

8. Ensemble (10) de frein à disque selon la revendication 7, dans lequel l'au moins un alésage (54) définit un diamètre intérieur (541D) et la partie de queue (474) de la tige de guidage (412) définit un diamètre extérieur (474OD) qui est inférieur au diamètre intérieur (474ID) de l'au moins un alésage (54), ou
dans lequel l'au moins un point de contact s'étend sur moins de 180 degrés.

9. Procédé pour produire un ensemble (10) de frein à disque comprenant les étapes de :
(a) prévision d'un support d'ancrage (32) ayant au moins un alésage (54) formé dans celui-ci, l'alésage (54) définissant un premier axe (X1) ;
(b) prévision d'une tige de guidage (12) ayant au moins une fente (82) formée dans celle-ci, la tige de guidage (12) définissant un deuxième axe (X) ;
(c) mise en place d'un élément (84), qui est formé séparé de la tige de guidage (12), dans la fente (82), l'élément (84) incluant un premier élément formé à partir d'un matériau élastomère et un deuxième élément formé à partir d'un matériau métallique ;
(d) suite à l'étape (c), mise en place de la tige de guidage (12) dans l'au moins un alésage (54) du support d'ancrage (32) dans lequel l'élément est utilisable pour pousser la tige de guidage (12) dans l'au moins un alésage (54) pour ainsi décaler le deuxième axe (X) de la tige de guidage (12) par rapport au premier axe (X1) de l'au moins un alésage (54) de telle sorte qu'il est prévu au moins un point de contact défini entre uniquement une partie de la tige de guidage (12) et une partie d'une surface intérieure de l'au moins un alésage (54), et dans lequel, lors d'au moins une de l'étape (c) et de l'étape (d), le deuxième élément est configuré pour se déformer pour ainsi retenir l'élément dans la fente (82).

10. Procédé selon la revendication 9, dans lequel, lors d'au moins une de l'étape (c) et de l'étape (d), l'élément (84) est retenu dans la fente (82) par un ajustement par pression, ou
dans lequel la fente (82) est d'une configuration fermée et définit une première largeur supérieure de fente à une extrémité supérieure ouverte de celle-ci qui est inférieure à une deuxième largeur inférieure de fente à une extrémité inférieure de fond fermé de celle-ci, dans lequel la bande métallique est une bande métallique de façon générale plate avant assemblage et, lors d'au moins une de l'étape (c) et de l'étape (d), la bande métallique est déformée de façon permanente en une bande de forme générale en U pour retenir l'élément dans la fente (82), ou
dans lequel la fente (82) est d'une configuration fermée et définit une première largeur supérieure de fente à une extrémité supérieure ouverte de celle-ci qui est inférieure à une deuxième largeur inférieure de fente à une extrémité inférieure de fond fermé de celle-ci, dans lequel la bande métallique est une bande métallique de façon générale en U avant assemblage et, lors d'au moins une de l'étape (c) et de l'étape (d), la bande métallique est déformée de façon permanente en une bande de forme générale également en U pour retenir l'élément dans la fente (82), ou
dans lequel la fente (82) est d'une configuration fermée et définit une première largeur supérieure de fente à une extrémité supérieure ouverte de celle-ci qui est inférieure à une deuxième largeur inférieure de fente à une extrémité inférieure de fond fermé de celle-ci, dans lequel la bande métallique est une bande métallique de façon générale en arc avant assemblage et, lors d'au moins une de l'étape (c) et de l'étape (d), la bande métallique est déformée de façon non permanente pour retenir l'élément dans la fente (82).

11. Tige de guidage (412) adaptée à une utilisation dans un ensemble (10) de frein à disque selon l'une quelconque des revendications 1 à 8 comprenant :
une tige de guidage (412) ayant une rainure (478) formée dans celle-ci, la rainure (478) définissant un premier axe qui est excentrique par rapport à un deuxième axe de la tige de guidage (412), la rainure (478) ayant un élément (484) disposé dans celle-ci qui est configuré pour pousser la tige de guidage (412) dans un alésage d'un support d'ancrage (32) de l'ensemble (10) de frein à disque, d'où il résulte que le deuxième axe de la tige de guidage (412) est excentrique par rapport au premier axe de l'au moins un alésage (54) de telle manière qu'il est prévu au moins un point de contact défini entre uniquement une partie de la tige de guidage (412) et une partie d'une surface intérieure de l'au moins un alésage (54).

12. Tige de guidage (412) selon la revendication 11, dans laquelle l'élément (484) est une bague annulaire en caoutchouc, la tige de guidage (412) inclut une première extrémité, une partie de queue (474) et une deuxième extrémité (472) opposée, et la rainure (478) est formée au moins dans la partie de queue (474).
